# EUROPEAN PATENT APPLICATION

(11) **EP 4 821 811 A2**
(43) Date of publication of application: **14.10.2026**
(21) Application number: 26197678.1
(22) Date of filing: 27.09.2022
(51) Int. Cl.: B64C 29/02

(54) **CLOSED POLYGONAL WING MEMBER AND USES THEREOF**

(30) Priority: 27.09.2021 US 202163249015 P; 12.04.2022 US 202263329973 P
(62) Document number(s) of the earlier application(s) in accordance with Art. 76 EPC: 22873735.9 / 4 408 744
(71) Applicant: Sia "Fixar-Aero", 1067 Riga (LV)
(72) Inventor: FAINVEITS (LUKASHOV), Vasilii, 2015 Jurmala (LV); SERGEI, Lobanov, 1007 Riga (LV); SERGEJS, Timofejevs, 1029 Riga (LV)
(74) Representative: Evens, Paul Jonathan

(57) **Abstract**

An aerial vehicle (AV) comprising a closed polygonal wing member (100) having a predetermined number of facets, wherein the facets cooperatively define a closed loop forming a full contour of the wing member.

## Description

### COPYRIGHT NOTICE

A portion of the disclosure herein below contains material that is subject to copyright protection. The copyright owner has no objection to the reproduction by anyone of the patent document or the patent disclosure as it appears in the Patent and Trademark Office patent files or records, but otherwise reserves all copyright rights whatsoever.

### BACKGROUND

The disclosure is directed to a transitional aircraft. Specifically, the disclosure is directed to a transitional aerial vehicle (AV), having a closed polygonal wing member allowing for, inter-alia; smaller dimensions (footprint) compared to AV with same lift/wing surface, higher payload capacity, vertical take-off and landing (VTOL), versatile flight modes (e.g., VTOL, hover, fixed wing cruising, side-to-side flight), effective work with rotors mounted with fixed longitudinal and transverse angle deflection in two arrays, longer flight time and distance, and the ability to self-stabilize landing on and taking off from uneven surfaces, with systems and methods for selectably releasing and protecting payload using air-bags operable to inflate in a payload-dependent manner.

According to basic aerodynamic principles, the forces which act on an aircraft in flight include lift, weight, thrust and drag. For straight and level non-accelerated flight, thrust is equal in magnitude but opposite in direction to drag, and weight is equal in magnitude and opposite in direction to lift. Maneuver control over an aerial vehicle (AV) in flight is obtained by changing the magnitude or direction of these forces, and to thereby cause the AV to change its attitude in pitch, roll or yaw. Not surprisingly, any one aspect of attitude control cannot be changed without there being some cross effect on another aspect.

Of the forces which act on an AV, the factors which affect thrust, lift and drag are to at least some extent controlled by the pilot and/or propulsion systems used. The thrust force is simply changed by operation of the AV's powertrain. On the other hand, lift and drag are typically aerodynamic in nature and are dependent on the particular configuration of the air vehicle and its air foils.

As it stands, some wing designs are particularly good for creating lift at relatively high (air) speeds. These same wings, however, may be less at lower speeds. On the other hand, some wing designs are well suited for creating lift at lower speeds but are generally ill suited for generating lift at the higher air speeds. Stated differently, no single wing configuration is optimal for both high speed and low speed flight. Nevertheless, it is clearly desirable that an air vehicle be able to fly with effective control at both high and low speeds, and even more so, when used in conjunction with hybrid fixed and rotating wings.

A very important engineering consideration when determining the flight as well as task parameters' envelope for an aircraft involves the ability of the craft to transition from high speed flight to low speed flight. One solution to this problem has been to create reconfigurable wings. To this end, several mechanisms have been proposed. These mechanisms include such devices as flaps, slots and slats as well as swing wings. In each case, the device is manipulated by the operator (e.g., pilot, controller) to alter the configuration of the wing and thereby change its coefficient of lift (Cₗ). Specifically, as the velocity (V) of the aircraft is reduced, an increase in the coefficient of lift (C) is necessary to maintain the same lift.

For drone aircraft, or unmanned AV (UAVs), not all of the creature comfort considerations involved in piloted aircraft are involved. Nevertheless, the aerodynamic response of the AV is still a major concern. Additionally, as a somewhat competing concern, it is desirable with UAVs to use as few different component parts as are necessary to create an efficient AV.

Currently, UAVs are developed to complete a wide range of specialized tasks, such as, for example, combat, surveillance, delivery, search and rescue operations, industrial surveying and inspection, construction, mining, stockpiling, photogrammetry, aerial photography, cinematography, and video, live streaming, newsgathering, multispectral analysis, for vegetation, biological plant protection, asset perimeter inspection, transmission lines and pipelines inspection, interception of other UAVs, geodesy and cartography and other.

Typically, these UAVs were developed as multipurpose carrying platforms, to carry variable freight and/or payload. But any special application of UAV depended on special functional conditions and requirements, which in turn, are determined by the UAV's principal design solutions (design for X, or DFX). Among UAVs' determining DFX requirements are factors such as, flight duration, cruising altitude, payload type and weight, hovering ability and the like.

Furthermore, many types of applications for UAV require level cruising flight for a substantial distance, simultaneous with VTOL ability. VTOL ability is especially relevant when there is no dedicated runway, and accommodation of such runway is impossible due to the absence of clear landing space, for example in urban environment, marine vessels, drilling platforms, substantially uneven terrain etc.

Likewise, it has become somewhat common to use unmanned aircraft (e.g. referred to as unmanned air/aerial vehicle (UAV) or "drone") and unmanned aircraft systems (UAS) (e.g. including an operator/pilot at a remote location, etc.) for a variety of purposes in flight in various environments under various operating conditions to deliver payload, or use extremely valuable payload. Such unmanned aircraft (UAV/craft or UAV/drone craft) at present are provided in a variety of forms (shapes/sizes), types (e.g. winged craft, rotor-driven craft, etc.) with a variety of propulsion systems (e.g. engines, thrust-production, etc.), capabilities, carrying capacities, control systems, telemetry systems, robustness, range, etc.; such known UAV/drone craft at present perform in military, commercial, and recreational applications.

Payload protection systems are commonly utilized onboard such delivery vehicles (e.g., vehicles, aircraft, spacecraft, launch rockets, unmanned aerial vehicles, unmanned submersible vehicles, and the like) to protect one or more payloads at a desired time of deployment. Generally, it is desirable for such systems to protect the payload along a desired route with a high degree of reliability until such time that the payload is delivered to its destination. At the same time, it is desirable for such payload protection systems to be highly reliable and relatively inexpensive to implement.

With the advances made to UAV construction, there are circumstances where the value of the payload far exceeds that of the payload-carrying vehicle. Moreover, it may be desired, under certain other circumstances, to release and protect the payload following loss of control over the payload-carrying vehicle, whether through technical malfunction, or through hostile interception.

These and other shortcomings of the existing technology are sought to be resolved herein.

### SUMMARY

Disclosed, in various exemplary implementations, are aerial vehicles (AVs), having closed polygonal wing member, with and without a payload protection systems. Specifically, provided are transitional AVs having a closed polygonal wing member allowing for versatile assembly configurations for varying payload, cruising speed, cruising distance while enabling stable transitional vertical take-off and landing (TVTOL) on uneven surfaces, with systems and methods for selectably releasing and protecting in-flight payload using air-bags operable to inflate in a payload-dependent manner, configured to absorb ground impact following deployment, while optionally, leveling the payload.

In an exemplary implementation, provided herein is an aerial vehicle (AV) comprising a closed polygonal wing member having a number of facets between 3 and 6.

In another exemplary implementation, provided herein is an AV having a closed polygonal wing member that is a triangle, allowing for versatile assembly configurations for varying payload, cruising speed, and cruising distance while enabling stable vertical take-off and landing (VTOL) on and from uneven surfaces, the triangle wing member comprising: a base, the base operable as an rear wing having a pair of lateral ends; and a pair of legs, each leg having an upper surface, lower surface, apical end, basal end, and defining a leading edge and a trailing edge; the AV further comprising a pair of vertical stabilizers forming an integral part of the closed triangle polygonal wing member, each stabilizer having an apical end and a basal end disposed at, and coupled to a corresponding lateral end of the rear wing wherein the basal end of each vertical stabilizer is coupled to the apical end of a corresponding leg , wherein the apical end of each vertical stabilizer is coupled to a nacelle, the nacelle being coupled to a corresponding lateral end of the rear wing.

In another exemplary implementation, provided herein is a kit comprising the AV described herein; packaging; and instruction, the kit configured when assembled to form a UAV system with TVTOL capabilities.

In yet another exemplary implementation, provided herein is a payload shielding system comprising: a first half shell operably coupled to the payload comprising a first drive train operable to inflate or deflate a first air bag operably coupled to the first half shell; a second half shell operably coupled to the payload comprising a second drive train operable to inflate or deflate a second air bag operably coupled to the second half shell; at least one sensor, operable to detect a first triggering event, and a second triggering event; and a central control module (CCM), coupled to the first half shell, in communication with: the first drive train, the second drive train, and the at least one sensor, the CCM further comprising at least one power source (and optionally, a backup power source), and at least one processor, the processor being in further communication with a non-transitory memory device, storing thereon a set of executable instructions, configured when executed by the at least one processor to: upon detection by the at least one sensor of the first triggering event, using the first and second drive trains, deploy the first air bag, and the second air bag. The CCM power source may be the same or different than the poser source powering the first and second drivetrains coupled to the first and second airbags.

In an exemplary implementation, provided herein is a a kit comprising: a first half shell operably coupled to the payload comprising a first drive train operable to inflate or deflate a first air bag operably coupled to the first half shell; a second half shell operably coupled to the payload comprising a second drive train operable to inflate or deflate a second air bag operably coupled to the second half shell; at least one sensor, operable to detect a first triggering event, and a second triggering event; and a central control module (CCM), the kit further comprising packaging and optionally instruction, wherein the kit is operable to be assembled to form the payload -protection systems disclosed. The sensors, each operable to detect the first and second events, are integral with the payload chamber. However the CCM can receive input signal from other sensors that are external to the payload chamber.

In another exemplary implementation, provided herein is a computer-readable media comprising a set of executable instructions, configured, when executed by at least one processor to cause the processor to: upon detection by at least one, integrally coupled sensor in communication with the at least one processor of a first triggering event, using a first and second drive trains in communication with the at least one processor, deploy a first air bag, and a second air bag operably coupled to a payload chamber.

In an exemplary implementation, provided herein is a kit comprising: a closed polygonal wing member comprising: a base, the base operable as a rear wing having a pair of lateral ends; and a pair of legs, each leg having an upper surface, lower surface, apical end, basal end, and defining a leading edge and a trailing edge; a blended wing body (BWB), having a nose section, a tailless stern section, and a central fuselage section defining a longitudinal axis, wherein the closed polygonal wing member is slanted at a predetermined angle across the BWB from below the nose section to above the tailless stern section; a plurality of rotors operably coupled to the closed polygonal wing member, configured in an array, operable for vertical take-off and landing (VTOL) packaging; and optionally instruction, wherein the kit is configured, when assembled to form an unmanned aerial vehicle operable for vertical take-off and landing (VTOL).

In yet another exemplary implementation, provided herein is at least one of: an aircraft, a spacecraft, a launch rockets, an unmanned aerial vehicles (UAV), and an unmanned submersible vehicles (USV), each accommodating the payload protection systems disclosed.

These and other features of the AVs, hybrid AVs having fixed and rotating wings with transitional VTOL capabilities, including for controllable payload protection, will become apparent from the following detailed description when read in conjunction with the figures and examples, which are exemplary, not limiting.

### BRIEF DESCRIPTION OF THE FIGURES

For a better understanding of the AVs, hybrid AVs having fixed and rotating wings with transitional VTOL capabilities, with a payload protection module, with regard to the exemplary implementations thereof, reference is made to the accompanying examples and figures, in which:
FIG. 1, illustrating a top perspective view of an exemplary implementation of a triangle closed polygonal wing member;
FIG. 2, illustrates a bottom perspective view of the exemplary implementation of a triangle closed polygonal wing member illustrated in FIG. 1;
FIG. 3 illustrates a front elevation view of the exemplary implementation of a triangle closed polygonal wing member illustrated in FIG. 1;
FIG. 4A, illustrates a top perspective view of the rear wing forming a facet of the closed polygonal wing member illustrated in FIG. 1, with FIG. 4B illustrating the asymmetric airfoil profile thereof taken along line A-A in FIG. 4A;
FIG.s 5A, and 5B illustrate the pair of vertical stabilizer, each is a mirror image of the other:
FIG. 6 illustrate the leg configuration of the exemplary implementation of the triangle closed polygonal wing member illustrated in FIG. 1;
FIG. 7, illustrates a bottom perspective view of the blended body wing (BWB) and pair of winglets coupled thereto, operable to couple to the exemplary implementation of a triangle closed polygonal wing member illustrated in FIG. 1;
FIG. 8A, illustrates only the BWB shown in FIG. 7, with FIG. 8B illustrating the BWB airfoil profile taken along line B-B in FIG. 8A;
FIG. 9, illustrate one of the pair of nacelles illustrated in FIG. 1;
FIG. 10A, illustrate the exemplary implementation of the triangle closed polygonal wing member illustrated in FIG. 1, equipped with an array of rotors, with FIG. 10B illustrating the addition of the BWB to the configuration illustrated in FIG. 10A, and FIG. 10C, illustrating the addition of the winglets pair to the exemplary implementation illustrated in FIG, 10B;
FIG. 11A is a side elevation view of the exemplary implementation of a triangle closed polygonal wing member illustrated in FIG. 1, with FIG. 11B being a side elevation view of another exemplary implementation illustrating an alternative angle for the rotors;
FIG. 12A, illustrates the configuration shown in FIG. 10B, or 10C, prepared for vertical takeoff or immediately following landing, while FIG. 12B, illustrates another exemplary implementation at the same circumstances with a payload safety system;
FIG.s 13A-13B illustrate more exemplary implementation of the AV using the triangle closed polygonal wing member;
FIG.s 14A-14E illustrate more exemplary implementations for using different types, location and number of propulsion powertrains;
FIG.s 15A-15C illustrate more exemplary implementations for using different closed polygonal wing members, with and without a fuselage members;
FIG.s 16A-16D illustrate the effect of various configuration on the total lift surface, dead surface and their ratio;

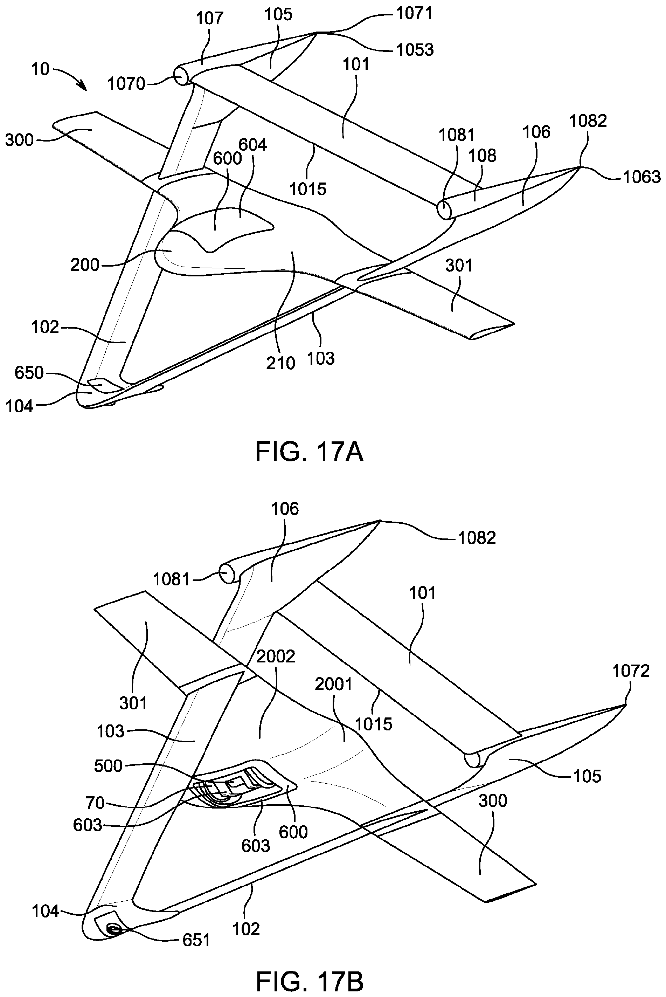

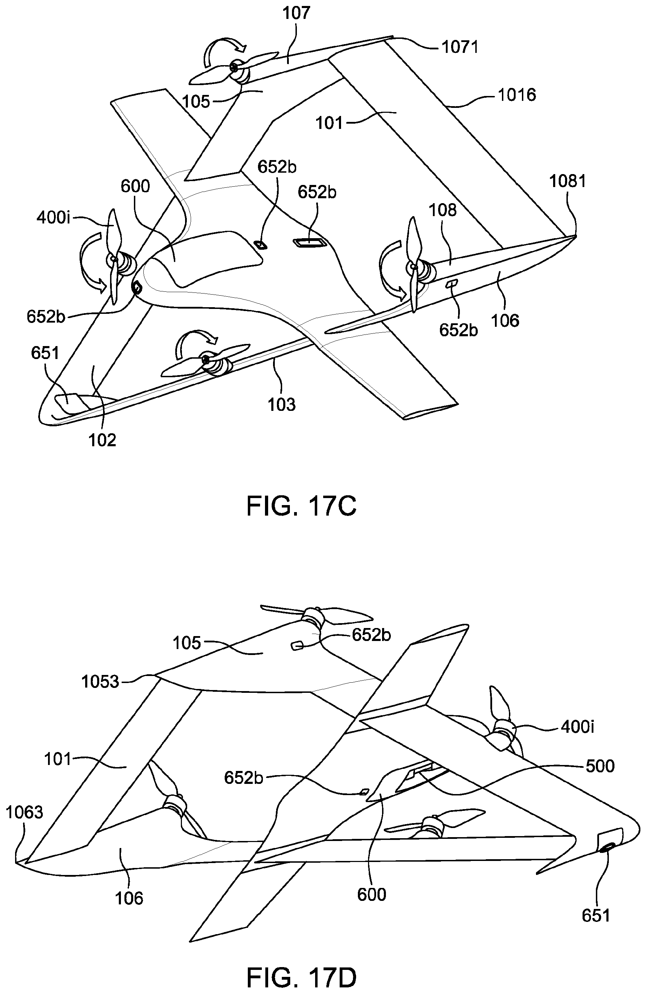

FIG. 17A, illustrates a top left perspective view of an exemplary implementation of a tVTOL with an anterior rear wing configuration as well as the payload protection module, with FIG. 17B, being a bottom left perspective view thereof, while FIG. 17C illustrates a top left perspective of another exemplary implementation of a tVTOL having a posterior rear wing configuration, and FIG. 17D being a bottom right perspective view thereof;

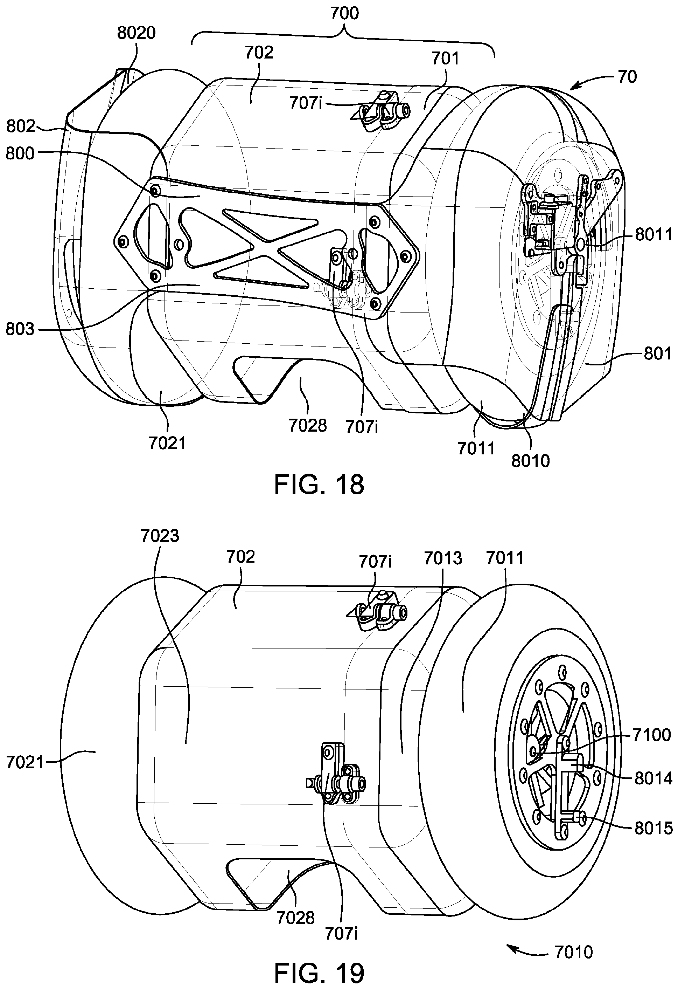

FIG. 18, illustrating a side view of an exemplary implementation of a payload module having shielding/protection system, including a brace frame assembly;

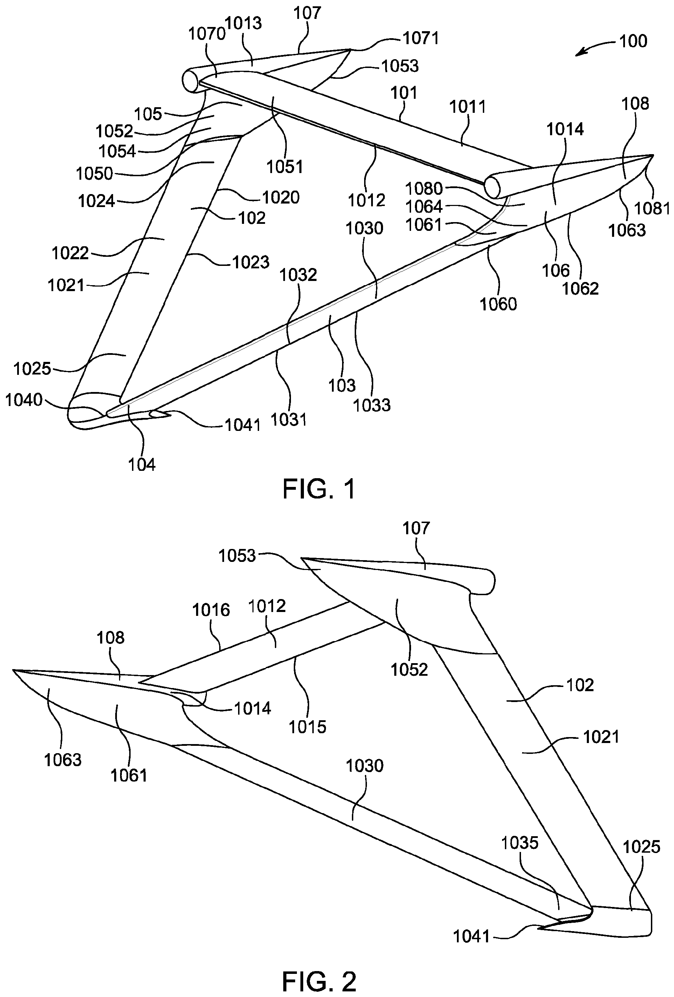

FIG. 19, illustrates a side view of the exemplary implementation illustrated in FIG. 1, without the brace frame assembly;

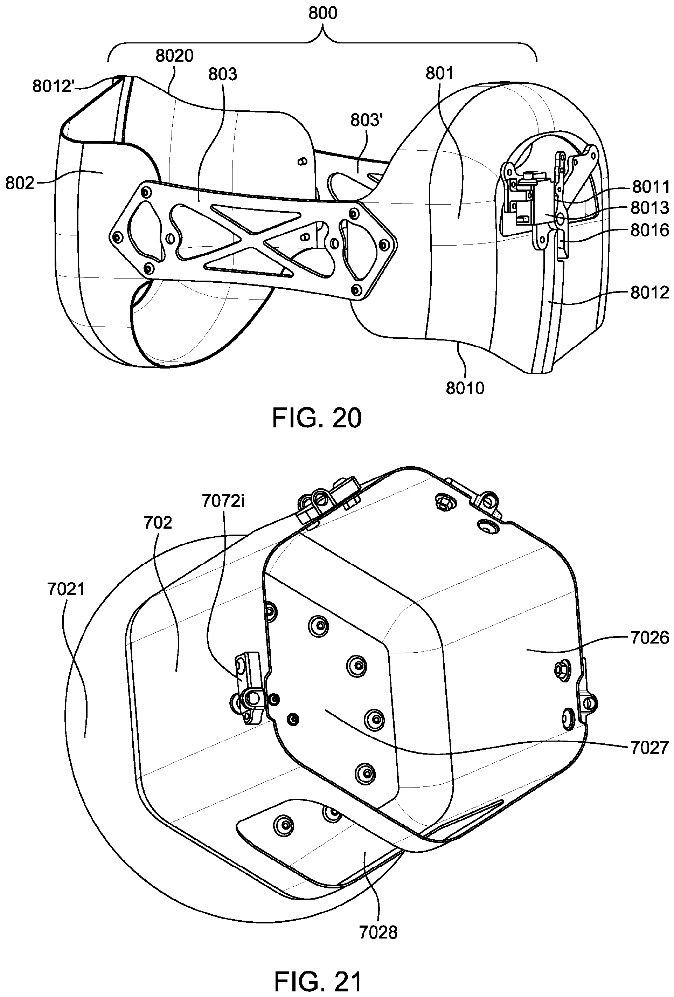

FIG. 20 illustrates a perspective view of the brace frame assembly;
FIG. 21 illustrates a bottom perspective of the second half shell;
FIG.s 22 illustrates a bottom perspective of the first half shell with maximally inflated air bag:

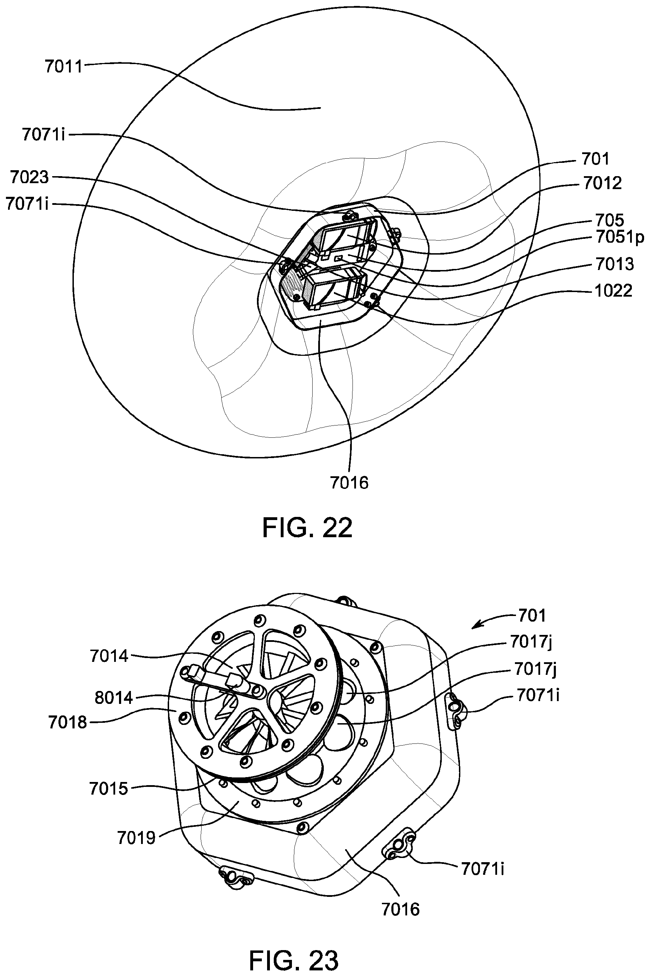

FIG. 23 illustrate a top perspective view of the first half shell;

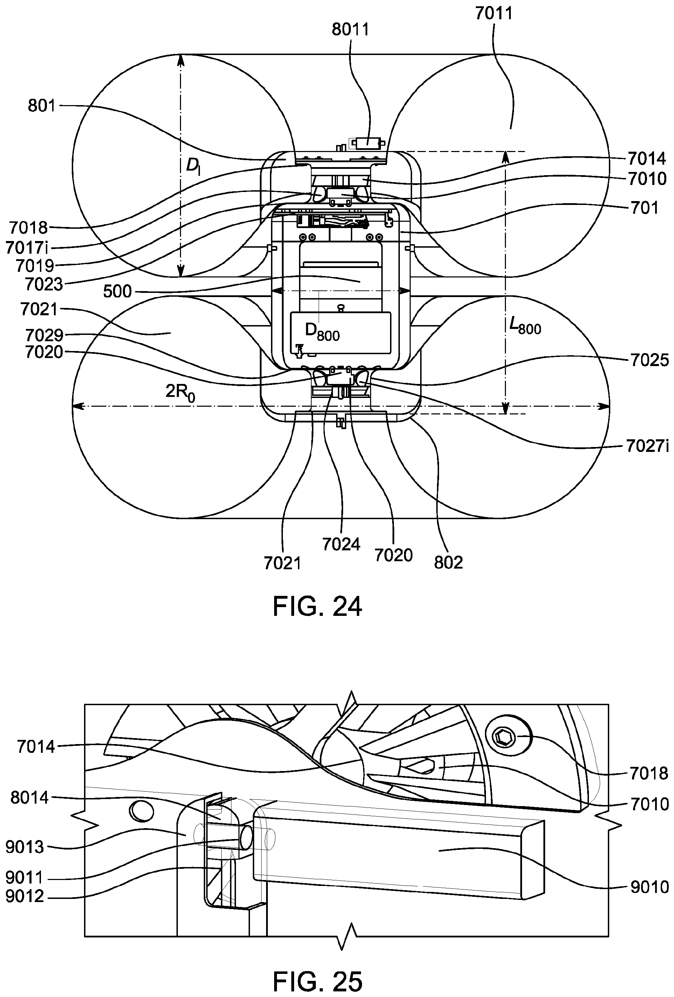

FIG. 24, illustrates a X-Z cross-section of an exemplary implementation of the payload protection system, with two air-bags deployed;
FIG. 25, illustrates an additional/alternative release mechanism for the payload shielding/protection system from the brace frame assembly;

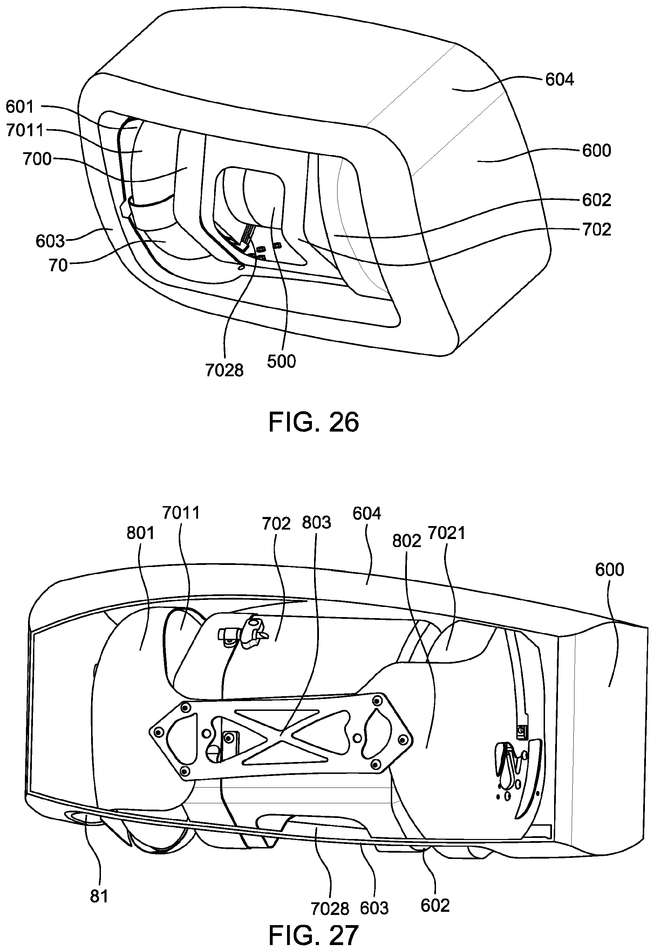

FIG. 26, illustrating an exemplary implementation of the payload module with the payload protection system coupled thereto; and
FIG. 27, showing a cutaway view from another angle of the payload module with the payload protection system coupled thereto

### DETAILED DESCRIPTION

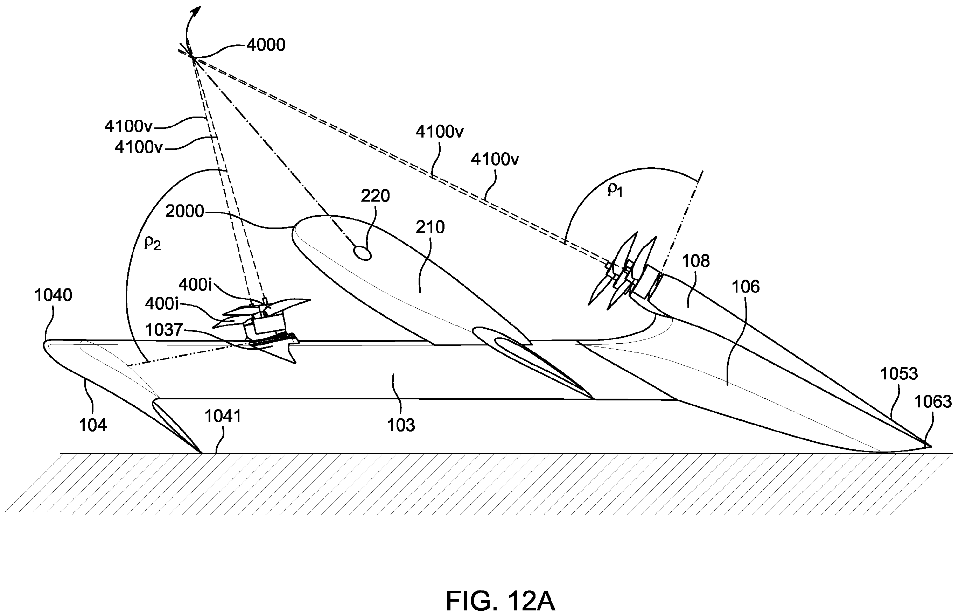

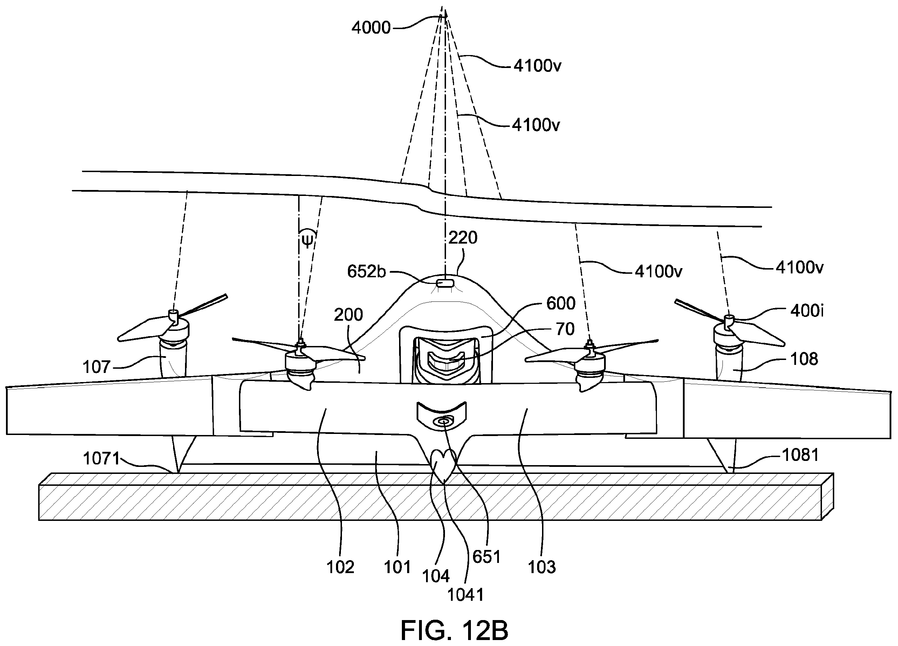

Provided herein are exemplary implementations of a transitional AV having a closed polygonal wing member allowing for versatile assembly configurations for varying payload, cruising speed, cruising distance while enabling stable vertical take-off and landing (VTOL) from, or on uneven surfaces. In certain exemplary implementations, the disclosed hybrid fixed and rotating wings UAV having transitional VTOL capabilities, provides enhanced controllability, having seamless transition between hover and level cruising flight modes, which practically eliminates stalling. The seamless transitioning between hover and level cruising flight modes is achieved, for example, by rotors mounted with fixed angle, longitudinal and transverse deflection in two arrays (see e.g., FIG. 12), and where the center of gravity (COG) of the AV is located at the intersection of the rays extending from the rotor axes once vertical flight is desired.

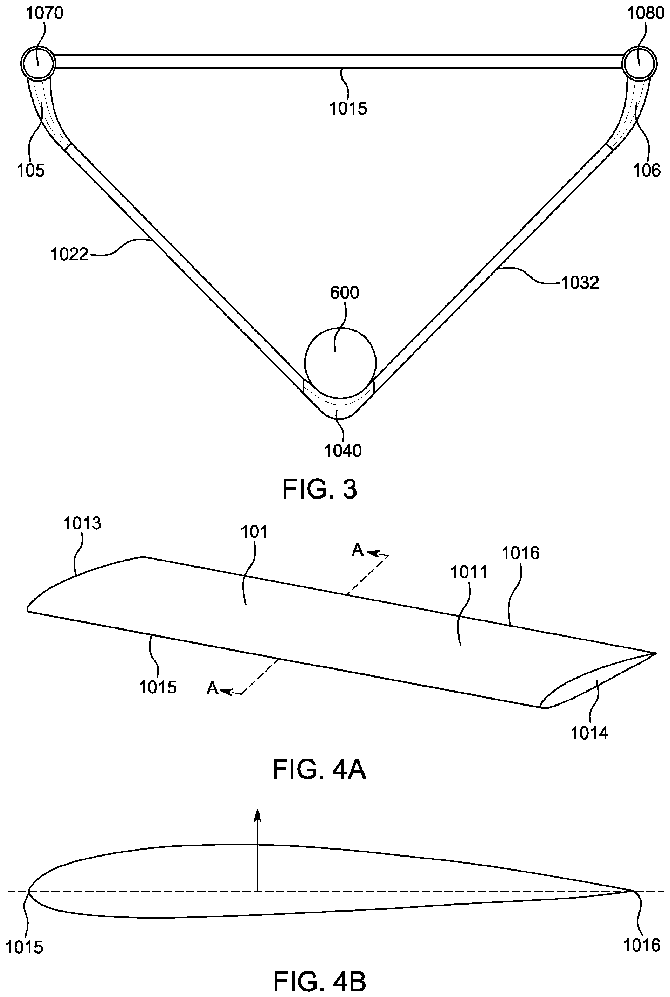

While airplane designs with a double V-shaped tail, are known, provided herein is a transitional (in other words, transitional between VTOL/hover and fixed wing flight modes) flying wing having the closed V-shape (e.g., the rear wing and the legs, see FIG. 3) forming the full contour of the wing with fixed rotors (or other propulsion means, like engines, rockets, motors, and the like), angled both longitudinally and transverse to the flight direction. In the disclosed design substantially all components provide lift surface to the AV, which includes, in certain exemplary implementation, the blended wing body (BWB) when used, the rear wing portion of the closed polygonal wing member, and winglets.

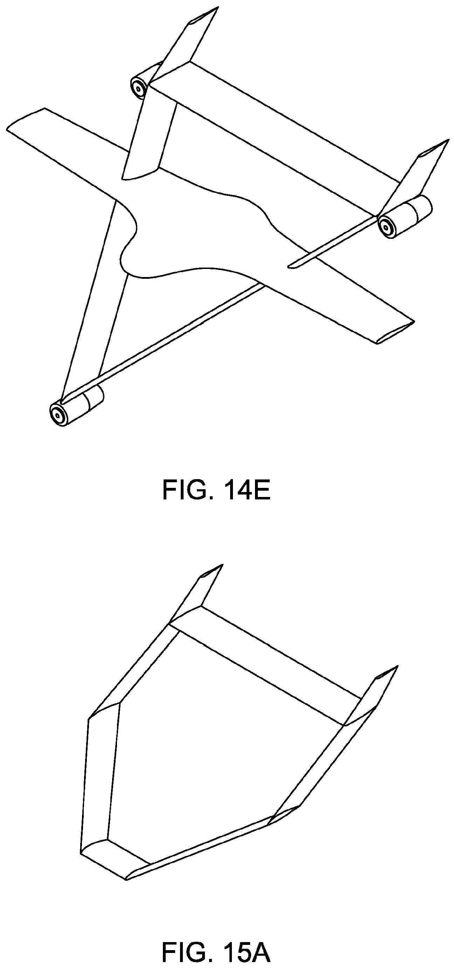

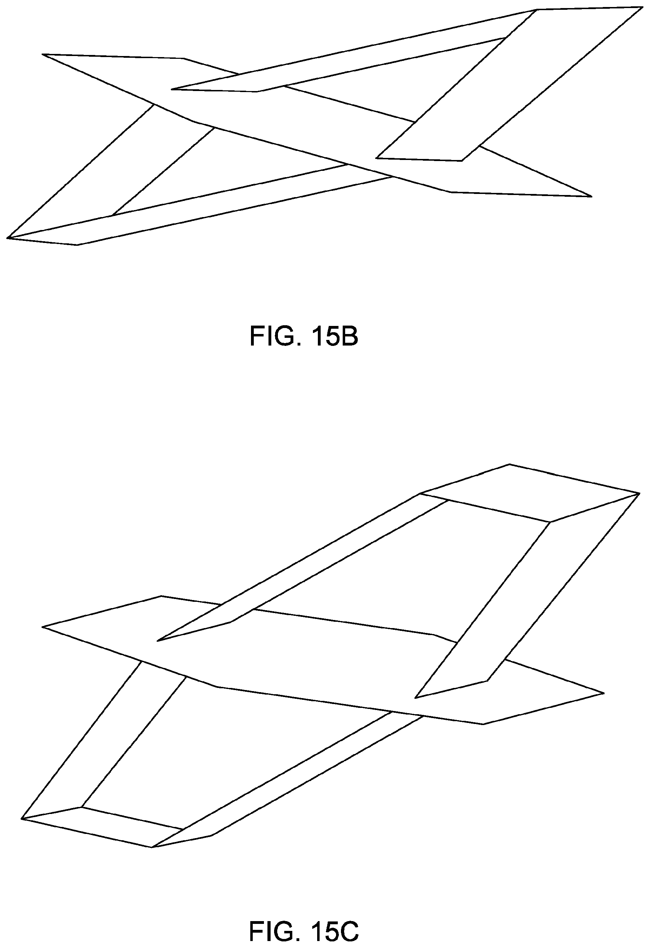

As illustrated in an exemplary implementation in FIG.s 1-3, provided herein, is aerial vehicle (AV) comprising a closed polygonal wing member 100 having a predetermined number of facets (see e.g., FIG.s 15A-15C), for example, between 3 and 6 facets. In an exemplary implementation, using uneven number of facets (e.g., 3 facets, 5 facets as illustrated in FIG.s 3) will be advantageous in self-stabilizing the AV on uneven terrain, not dissimilar to a 3-legged stool (See e.g., . Moreover, in certain exemplary implementations, the polygon defined by the closed polygonal wing member 100 is an irregular, non-equilateral polygon (See e.g. FIG. 15A).

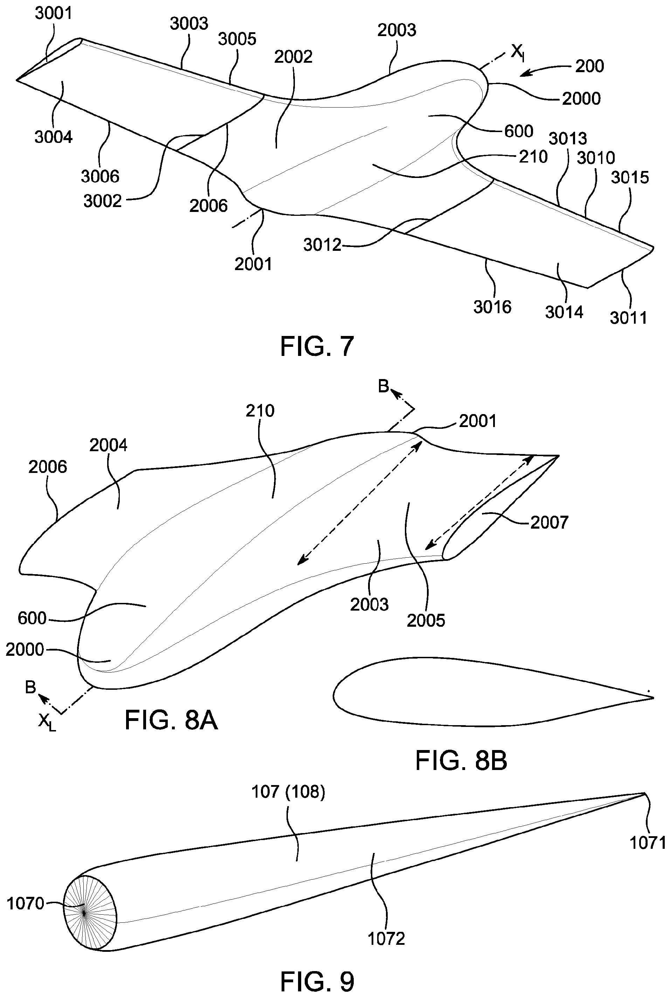

In an exemplary implementation, closed polygonal wing member 100 further comprises at least one vertical stabilizer, Accordingly, and as illustrated in FIGs 1-4, the polygon of the closed polygonal wing member 100 is a triangle comprising: a base, the base operable as an rear wing 101 having a pair of lateral ends 1013, 1014 (see e.g., FIG. 4) leading edge 1015 and trailing edge 1016 with upper surface 1011 and lower surface 1012; and a pair of legs 102, 103, each leg having an upper surface 1020, 1030, lower surface 1021, 1031, apical end 1024, 1034, basal end 1025, 1035, and defining a leading edge 1022, 1032 and a trailing edge 1023, 1033. Also illustrated in FIG.s 1-3, is legs ' coupler 104, defining airfoil profile in the X-Z direction, having leading edge 1040, and fin 1041 extending posteriorly from legs ' coupler 104. In other implementations, the vertical stabilizer(s) can extend from winglet 300, 301 (see e.g., FIG. 7 at lateral ends 3001, 3011), and/or rear wing 101 (see e.g., FIG. 4A), and/or leg(s) 102, 103, (or facets of polygonal, closed wing member 100, see e.g., FIGs 1, and 15A-15C). Furthermore, and as illustrated in FIG.s 3, 17A, and 17B, payload module 600, can be loaded atop, or beneath coupler 104 (see alternatively or additionally e.g., FIG.s 17A, 17B), or be sized and adapted to be incorporated and accommodated inside coupler 104, and/or nacelle(s) 107, 108, and/or vertical stabilizer(s) 105, 106.

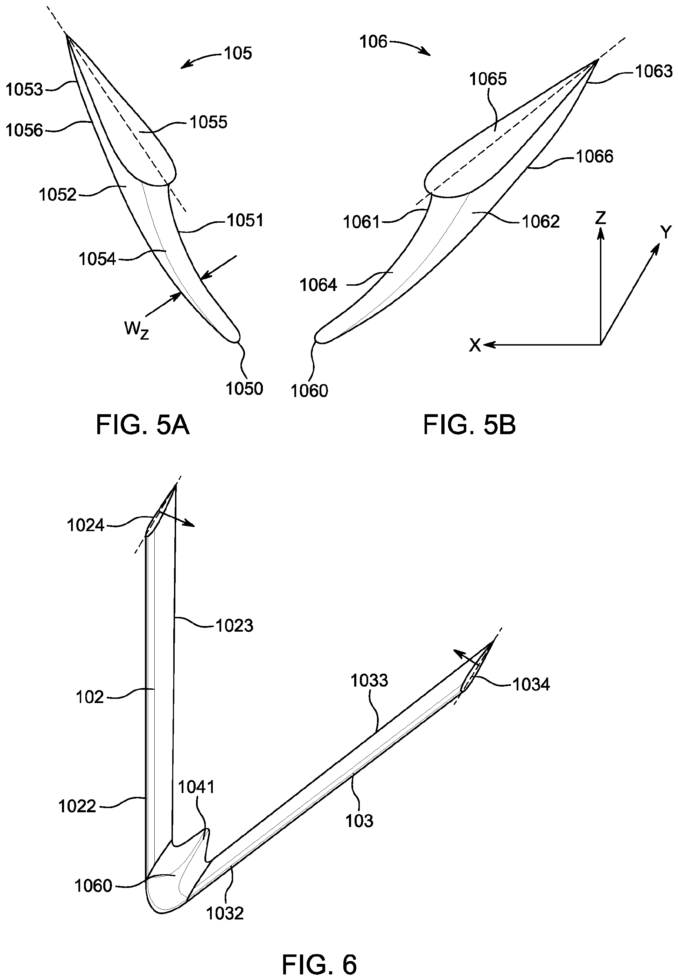

As further illustrated in FIG.s 1-3, 5A, and 5B, the AV further comprises pair of vertical stabilizers 105, 106 forming an integral part of closed polygonal wing member 100. As illustrated in FIG.s 13A-14A, other configurations for vertical stabilizers 105, 106 are also contemplated. Turning back to FIG.s 1-3, 5A, and 5B (as well as FIG.s 10A-12), each stabilizer 105, 106 having apical end 1055, 1065 and basal end 1050, 1060 disposed at, and coupled to corresponding lateral end 7013, 1014 of rear wing 101 wherein basal end 1050, 1060 of each vertical stabilizer is coupled to apical end 1024, 1034 of corresponding leg 102, 103. Furthermore, As illustrated in FIG. 3, apical end 1055, 1065 of each vertical stabilizer 105, 106 is coupled to nacelle 107, 108, whereby nacelle 107, 108 being coupled to corresponding lateral end 7013, 1014 of rear wing 101. As further illustrated in FIG.s 1-3, 5A, 5B and 11, each vertical stabilizer 105, 106 further defines a substantially vertical backswept tail 1053, 1063. In the context of the disclosure, the term substantially vertical is best illustrated in FIG. 3, where although presenting an arcuate Z-axis progression (see e.g., FIG. 5B), backswept tail 1053, 1063 are predominantly vertical relative to the horizontal plane (see e.g., FIG. 3). Accordingly and in an exemplary implementation, each vertical stabilizer 105, 106, having internal surface 1051, 1061 (facing the interior of closed polygonal wing member 100), external surface 1052, 1062 (facing toward the exterior of closed polygonal wing member 100), and further defines: leading edge 1054 and a trailing edge 1056, 1066; a X-Y cross section defining a profile that changes from a symmetric airfoil profile at apical end 1055, 1065 to an asymmetric airfoil profile matching the airfoil profile of apical end 1024, 1034 of legs 102, 103 at basal end 1050, 1060; and an arcuate tapering width (Wz, see e.g., FIG. 5A) in the Z-axis, decreasing from apical end 1055, 1065, to basal end 1050, 1060.

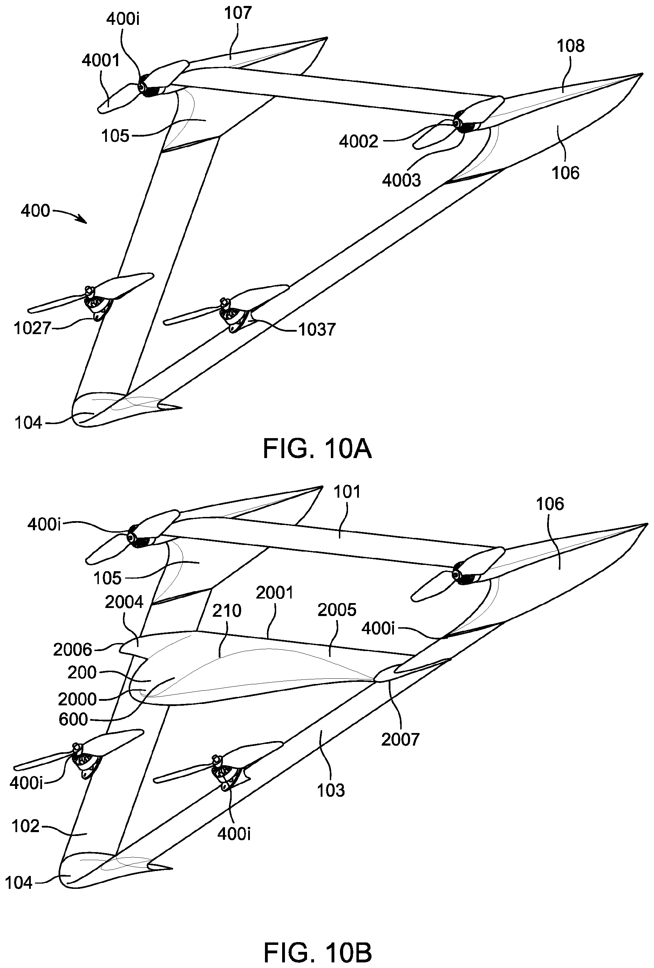

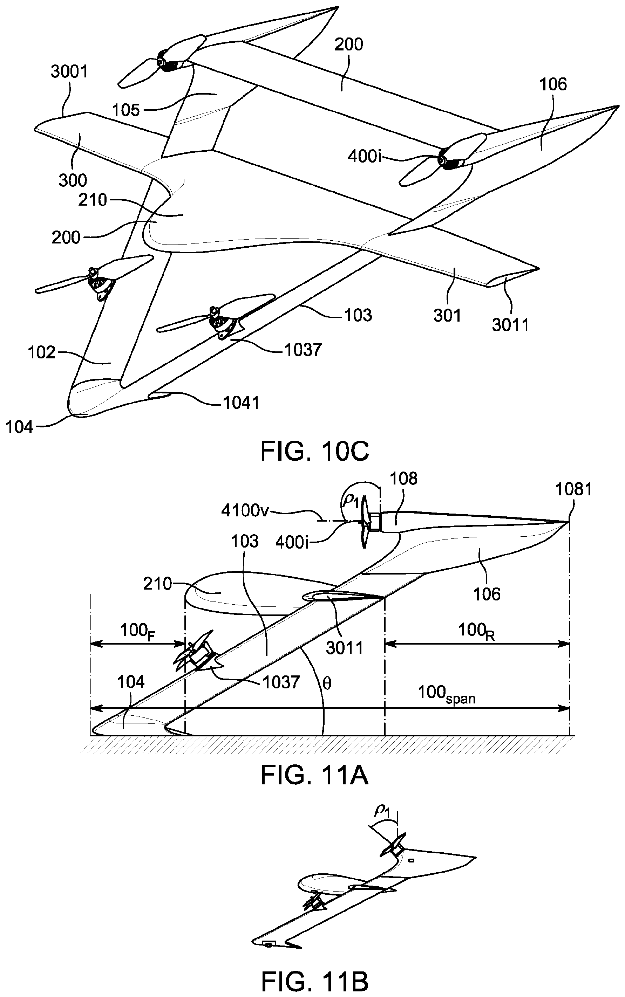

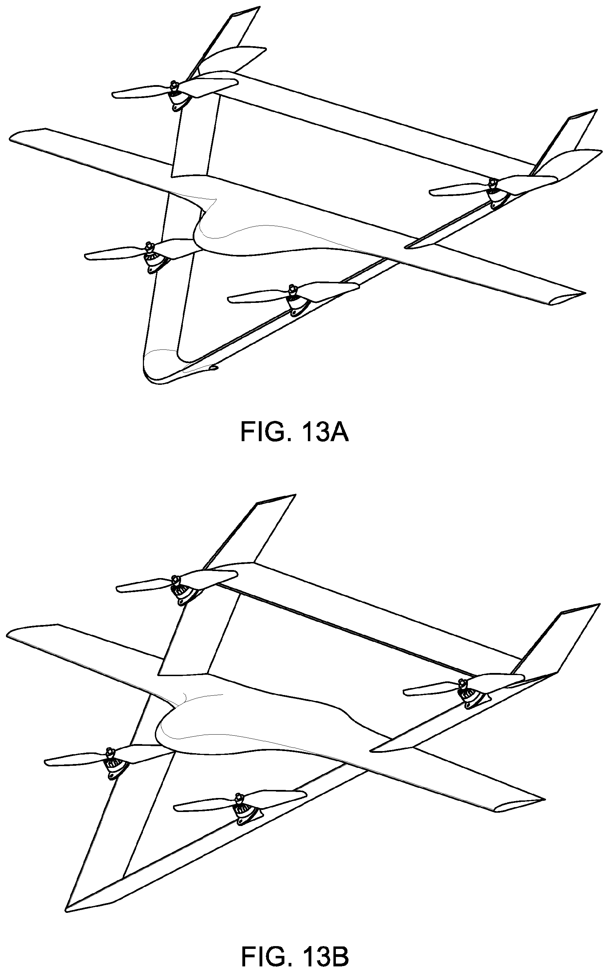

Turning now to FIG.s 7, 8A, and 8B, illustrating blended wing body (BWB) 200, having nose section 2000, tailless stern section 2001, and central fuselage section 210 defining a longitudinal axis *X_{L}*, wherein closed polygonal wing member 100 is slanted at a predetermined angle *θ* (see e.g., FIG. 11) across the BWB from below nose section 2000 to above tailless stern section 2001. As further illustrated, BWB 200 further has upper surface 2003, lower surface 2002 and a pair of extensions 2004, 2005 extending laterally from central fuselage section 210, each extension 2004, 2005 having lateral end 2006, 2007 operable to couple to corresponding leg 102, 103 (see e.g., FIG. 10B). As illustrated (see e.g., FIG.s 10C, 11), BWB 200 as a whole, and central fuselage section 210 define an airfoil profile (see e.g., FIG. 8B) to improve aerodynamic performance by increasing the lifting surface area and advantageously, substantially reducing dead weight of the AV. In addition, extensions 2004, 2005 taper, decreasing in width from (*W_{F}*) central fuselage section 210 to their respective lateral end (W_{E}). As further illustrated in FIG. 7, the AV, once configured as illustrated in FIG. 10C, will further comprise pair of tapered winglets 300, 301, each winglet 300, 301 having upper surface 3003, 3013, lower surface 3002, 3012, leading edge 3005, 3015, trailing edge 3006, 3016, wide lateral end 3002, 3012, and a narrow lateral 3001, 3011, wide lateral end 3002, 3012 operable to couple to corresponding leg 102, 103, forming a continuous plain with pair of extensions 2004, 2005 of BWB 200, as further illustrated in FIG. 10C. Central fuselage section 210 is operable in certain exemplary implementations to carry payload module 600, for example, cargo and/or passenger(s). AV 10 is scalable for manned flight. Although winglets 300, 301 illustrated in FIG. 7 as coupled directly to BWB 200, in certain exemplary implementation, see e.g., FIG. 10C, 12B, 13B-14C 16D, and 17A-17D, winglets 300, 301 are coupled to BWB 200 indirectly through legs 102, 103.

The payload can be arranged in other locations on the vehicle. As a preliminary matter, other than passengers in an exemplary implementation, the payload can be light detection and ranging (LIDAR) device, near-infrared/visible camera (NIR-VIS), forward-looking infrared camera (FLIR) and other kinetic payload or imaging modules. For example, LIDAR ports 652b can be distributed throughout the vehicle and provide spherical view around the vehicle at all times. In certain exemplary implementation (see e.g., FIG.s 12B, 17B, 17D), imaging module 651 is disposed in coupler 104. In the context of the disclosure, the term "imaging module" is intended to describe the image sensor device itself. The sensor when disposed within a housing, and including, as required, imaging optics, lenses, filters and the like, and electronic circuitry used to operate the image sensor device or used in conjunction with the image sensor device, is referred to as an optical reader. Likewise, in the context of the disclosure, the term "imaging module" means a unit that includes a plurality of built-in image sensors and outputs electrical signals, which have been obtained through photoelectric conversion, as an image, while the term "module" refers to software, hardware, for example, at least one processor, or a combination thereof that is programmed with instructions for carrying an algorithm or method. The modules described herein may communicate through a wired connection, for example, a hardwired connections, a local area network, or the modules may communicate wirelessly. The imaging module may comprise line cameras, laser scanners, charge coupled devices (CCDs), a complimentary metal-oxide semiconductor (CMOS) or a combination comprising one or more of the foregoing. For example, the imaging module can comprise a line scan camera and the field of view, will be determined by a predetermined scan period. If static images are required, the imaging module can comprise a digital frame camera, where the FOV can be predetermined by, for example, the camera size and height above the ground. The cameras used in the imaging modules of the systems and methods disclosed, can be a digital camera. The term "digital camera" refers in an embodiment to a digital still camera, a digital video recorder that can capture a still image of an object and the like. The digital camera can comprise an image capturing unit or module, a capture controlling module, a processing unit (which can be the same or separate from the central processing module for the printer), a display module and an operating module. Capturing the image can be done with, for example image capturing means such as a CCD solid image capturing device of the full-frame transfer type, and/or a CMOS-type solid image capturing device, or their combination.

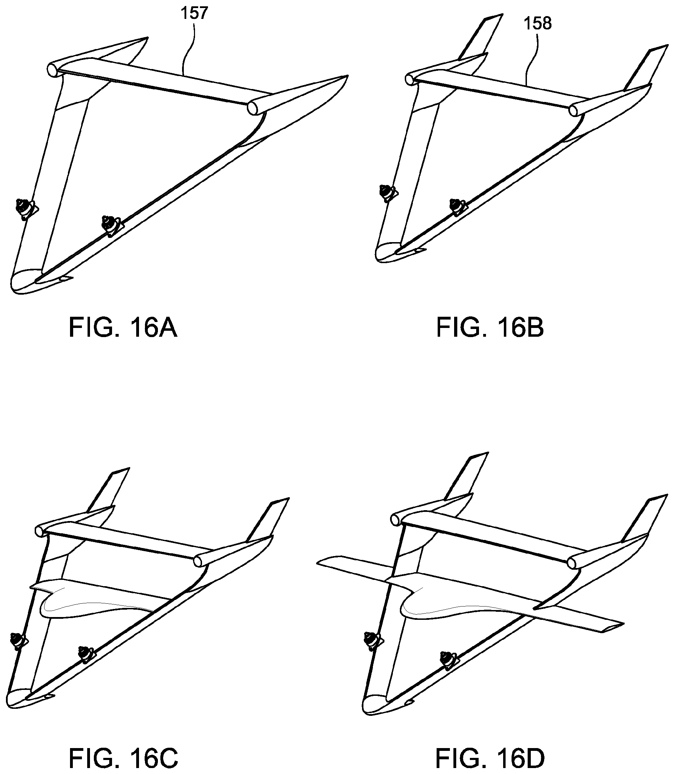

In the context of the disclosure, the term "dead weight" means components and systems that are only used in one of the three flight modes present, namely VTOL, transition and cruising. An example of the effect of the various configurations are illustrated in FIG.s 16A-16D. Table I, provided below shows the effect of adding additional vertical stabilizers 157, 158 (see e.g., FIG. 16B) to the configuration illustrated in FIG. 10C (excluding rotors 400i (FIG. 16A)), as well as BWB 200 in FIG. 16C, and finally, with winglets 300, 301 in FIG. 16D, on the total lift surface area (S_{Total}) in decimeters square (DC²); the effective surface area (S_{Effective}), or in other words, the surface area contributing to lift in all 3 flight stages; the dead surface area (S_{Dead}) and the ratio:

### Table I: Effect of configuration on lift/dead surface ratio

| Configuration | FIG. 16A | FIG. 16B | FIG. 16C | FIG. 16D |
|---|---|---|---|---|
| S_{Total} | 65.4284 | 70.6684 | 103.4584 | 122.7864 |
| S_{Effective} | 60.4884 | 60.4884 | 93.2784 | 112.5764 |
| S_{Dead} | 4.94 | 10.18 | 10.1 | 10.18 |
| Ratio | 92.45 | 85.59 | 90.16 | 91.68 |

As illustrated, in all configuration, the ratio between the effective lift surfaces area and the total surface area (S_{Effective}/S_{Total}), is higher than 85%.

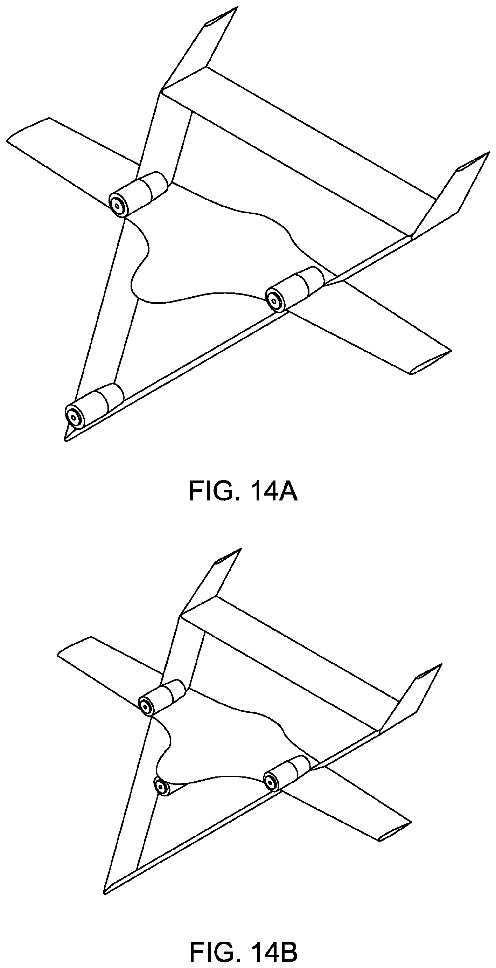

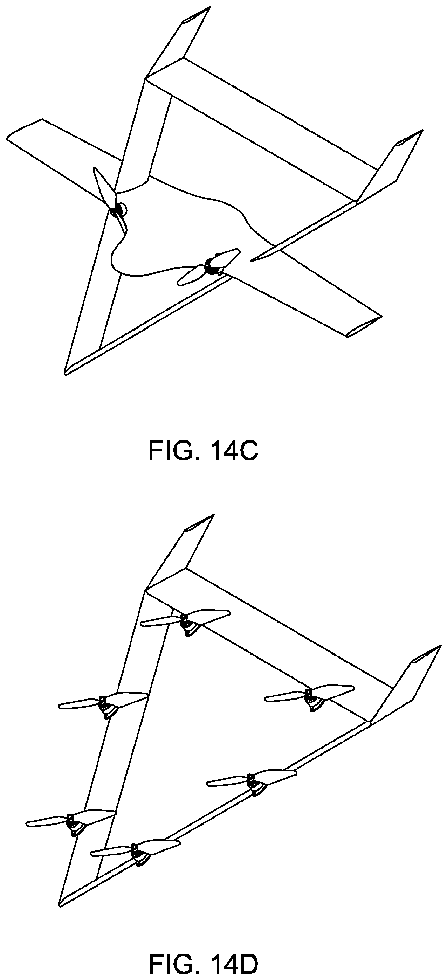

As illustrated in FIG. 9, each nacelle 107, 108, has a substantially frusto-conical shape with anterior-facing wide portion 1070, 1080, and conical tube shape having envelope 1072, (1082, not shown) with posterior end 1071 (1081). As used herein, the term "nacelle" refers to a streamlined enclosure, typically external to the fuselage, for example, in certain exemplary implementation an AV powertrain gearbox and/or engine, regardless of whether the nacelle is wing mounted (see e.g., FIG.s 10A), or fuselage mounted (see e.g., FIG. 14B), or in another exemplary implementation, payload module 600 enclosure (see e.g., FIG. 3).

In an exemplary implementation, AV 10 having closed polygonal wing member 100 allowing for versatile assembly configurations (see e.g., FIGs 1, and 10A-10C) for varying payload, cruising speed, cruising distance, further comprises a propulsion mean operable to propel and provide the thrust necessary to generate the lift in the AV. The propulsion mean can be, for example, a rotor propeller as illustrated in FIG.s 10A-10C, 13A, 13B and 14C, a turbojet engine, a turboprop engine, a turbofan engine (as illustrated e.g., in FIG. 14A, 14B), a turboshaft engine, a liquid-chemical propulsion rocket engine (see e.g., FIG. 14E), solid-chemical rocket engine, or an air-breathing rocket propulsion engine.

In an exemplary implementation, the propulsion means is a plurality of rotors 400i configured in an array, operable for vertical take-off and landing (VTOL). In the context of the disclosure, the term "rotor" is used to include rotors, propellers and any other suitable rotating blade 4001 or blade-type structure that imparts a force to a vehicle via interaction with the surrounding medium, be it air or fluid. Multi-rotor 400i AV 10 can include multiple subsystems, for example an avionics subsystem, a genset subsystem, one or more of electronic speed controllers (ESCs) drive motors 4003 that drive one or more rotors (e.g., propellers 4001). In some exemplary implementations, drive motor 4003 is "coupleable" to a rotor/propeller and to a corresponding leg mount 1027, 1037 (see e.g., FIG. 10A, 10B). That is, the drive motor is adapted in a structure that is capable of being coupled to the rotor/propeller. For example, pair drive motor 4001, having axle 4002, is each coupled to corresponding nacelle 107, 108 at wide posteriorly facing end 1070, 1080, such that rotors 400i are configured in an array of four (4) rotors, with two lower rotors disposed one each on corresponding mounting 1027, 1037 on leg 102, 103, and two rotors 400i, disposed one each at lateral end 7013, 1014 of rear wing 101, operably coupled to corresponding nacelle 107, 108. In an exemplary implementation, the climbing angle, or, in other words, the vertical takeoff angle (the angle between the angle of ascent and the horizon), is between about 45° and about 80° off horizontal, or between about 55° and about 80° off horizontal, for example, between about 60° and about 80° off horizontal. Conversely, the landing angle is about 90°, or normal to the horizon, regardless of the landing surface slope or the landing surface being uneven.

Turning now to FIG. 11A-11B, as illustrated, the slant angle *θ* of closed polygonal wing member 100 (see e.g., FIG.s 15A-15C) is between about 30 ° and about 60 ° off horizontal. Furthermore, closed polygonal wing member 100 extends anteriorly 100_{F} beyond the nose section of the BWB, while extending posteriorly 100_{R} beyond tailless stern section 2001 of BWB 200, thus providing the stability for VTOL as well as level cruising, whether in combination with winglets 300, 301, or without.

Furthermore, rotors' array formed in an exemplary implementation by a 2x2 rotors illustrated in FIG. 11A, 11B, can have different pitch angle *p*₁ off vertical that can be between, for example, 90° and about 30°. A 90° angle *p*₁ is illustrated in FIG. 11A, while a different angle is illustrated in FIG.s 11B, 17C, and 17D. It is noted, that the *p*₁ angle of upper rotors 400i coupled to nacelles 107, 108 can be different than the *p*₂ angle of lower rotors 400i operably coupled to legs 102, 103, so long as the *p*₁ angle is the same for both upper rotors 400i and the *p₂* angle for both lower rotors 400i. Both *p*₁, and *p*₂*,* will depend on the intended mission of the vehicle and will depend on at least one of: payload weight, length (duration) of flight, take-off elevation above sea level (ASL), and mission type (e.g., survey, payload delivery), and the like.

For example, rotors 400i are installed such that *p*₁ is 90°, and during steady flight, the upper pair of rotors 400i creates the needed forward thrust, and lift force is provided by all the aerodynamic surfaces of the wings and body. The lower pair of rotors are then configured to provide stabilization rather than providing lift, thus providing a greater flight range, but will require reduced weight of the payload carried. Conversely, when rotors 400i are installed such that *p*₁ is less than 90°, for example, between 30° and 75°. or between 30° and 60°, for example, 45° their operation vector will create both upward and forward thrust, the aerodynamic surfaces of the fuselage and wings will also create upward lift, and the lower pair of rotors will also provide both forward thrust and for creating lift, which, in turn will increase the maximum weight of the payload while somewhat compromising the energy efficiency and range.

Turning now to FIG. 12A, each rotor 400i in the array is tilted with both pitch angles *p*₁*, p*₂, and tilt angle ψ, such that rays 4100v, extending apically and axially from each rotor axis of rotation 4002 form a pyramid, with the pyramid apex 4000 configured to be vertically above the aircraft's center of gravity 220 following take-off and upon landing (but not during flight), when longitudinal axis *X_{L}*, defined by BWB 200, is normal to the horizon. As also illustrated in FIG. 12A, 12B, triangle closed polygonal wing member 100, includes 3 legs with front leg formed of fin 1041 extending posteriorly from legs' coupler 104, and posterior ends 1071, 1081, of nacelles 107 and 108 respectively. As indicated, the formation of a 3-legged plane 1071-1041-1081 allows for VTOL from uneven surfaces in a stable manner. Although in FIG. 12A, ray extending from apex 4000, to COG 220 is not plumb, following take off, when longitudinal axis *X_{L}*, defined by BWB 200, is normal to the horizon, rotors 400i are configured to pitch nose section 2000 such that apex 4000 is vertical and directly above COG 220. As further illustrated in FIG.s 17A, and 17B, payload module 600, with payload protection system 70 is configured to have payload 500 close to-, or coincide with COG 220.

Turning now to FIG.s 17A-17D, illustrating in FIG. 17A a top left perspective view of an exemplary implementation of tVTOL 10 with an rear wing 101 configuration whereby leading edge 1015 of rear wing 101 is in line with the anterior end 1070, 1080 of nacelles 107, 108 (see e.g., FIG. 9), as well as the payload 500 protection module 70 disposed within payload module 600, with FIG. 17B, being a bottom left perspective view thereof, while FIG. 17C illustrates a top left perspective of another exemplary implementation of tVTOL 10 having rear wing 101 configuration whereby trailing edge 1016 is in line with posterior ends 1071, 1081, of nacelles 107, 108, and FIG. 17D being a bottom right perspective view thereof. The location configuration of rear wing 101 relative along nacelles' 107, 108 longitudinal axis can be determined based on at least one of the intended mission of the vehicle and will depend on at least one of: payload weight, length (duration) of flight, take-off elevation above sea level (ASL), and mission type (e.g., survey, payload delivery), and the like. In an exemplary implementation, rear wing is configured to be continuously movable along nacelles 107, 108 longitudinal axis between anterior ends 1070, 1080, and posterior ends 1071, 1081. In yet another exemplary implementation, rear wing is configured to be fixed in one of the anterior ends 1070, 1080 or posterior ends 1071, 1081.

As further illustrated in FIG.s 17C, rotors 400i array of 2x2, where a pair of upper rotors are each coupled to nacelles 107, 108 respectively and a pair of lower rotors are each coupled to legs 102, 103 respectively are configured to each rotate in a direction opposite its nearest neighbor. For example, if top right rotor, coupled to nacelle 107 is configured to rotate in a clockwise direction, then the rotor coupled to nacelle 108, and the rotor coupled to leg 102, will rotate in a counterclockwise direction, thereby each providing counter force to the torque generated by the adjacent rotor, adding to the stability of the vehicle.

An exemplary implementation of the payload module 600 is illustrated in FIG.s 26, and 27, showing payload module 600, forming an internal compartment 601 (see e.g., FIG. 26), with upper surface 604, configured to form a surface complimentary to the upper surface 2003 of BWB 200 (see e.g., FIG.s 8A, and 17A) with lower surface 603, forming a surface that is complimentary to lower surface 2002 of BWB 200 , and further defining window 602, which can optionally be covered with transparent covering 620 (not shown), having a curvature configured to compliment the curvature of the lower surface 2002 of BWB 200 (see e.g., FIG.s 7, and 17B). Internal compartment is operable to engage payload protection system 70 (see e.g., FIG.s 17B, 18).

Accordingly, provided herein are exemplary implementations of systems and methods for protecting in-flight payload. The system and sub-systems disclosed can be designed for preserving valuable payloads in unmanned and other small aerial vehicles, some which are disclosed herein and illustrated, for example, in FIG. 17A, 17B, with optionally more than a single system per vehicle; with dimensions of up to 150 mm x140mm x140 mm installed. For example, the weight of the system (referring to the two half shell including support systems and the brace frame assembly, see e.g., FIG. 18), without the payload itself can be about 800 grams. In an exemplary implementation, the fully autonomous payload protection system 70, can have an internal (rechargeable) battery, as well as an internal clock and a dedicated control system. In deploying the protection system, there is no need to issue command from the ground and the system can be configured to deploy automatically.

As illustrated in exemplary implementations in FIG.s 18-26, provided herein, is payload shielding system 70 comprising: payload holding assembly 700 and brace frame assembly 800. As shown, first half shell 701 having lateral end 7013 (see e.g., FIG. 19) operably coupled to payload 500 (see e.g., FIG.s 17B, and 24) comprising first drive train 7100 (comprising the assembly of: first motor 7010 (see e.g., FIG. 24), first impeller 7014 (see e.g., FIG. 6), motor controller 7013 (see e.g., FIG. 22), and coupled to first and second power source components 7012, 7022, first drivetrain 7100 operable to inflate first air bag 7011 operably coupled to first half shell 701. The system also comprises second half shell 702 having lateral end 7023 (see e.g., FIG. 19), operably coupled to payload 500 comprising second drive train 7200 (comprising the assembly of: second motor 7020 (see e.g., FIG. 24), second impeller 7024 (see e.g., FIG. 23), and motor controller 7023 (see e.g., FIG. 22) coupled to first and second power source components 7012, 7022 (see e.g., FIG. 22), second drive train 7200 operable to inflate second air bag 7021 (see e.g., FIG. 24), operably coupled to second half shell 702. Additionally, at least one sensor 7051p is used, operable to detect first triggering event, and second triggering event; and central control module (CCM) 705 (see e.g., FIG. 22), coupled to first half shell 701, in communication with: first drive train 7100, second drive train 7200, and at least one sensor 7051p, CCM 705 further comprising at least one power source (and optionally a backup power source), and at least one processor, the processor being in further communication with a non-transitory memory device, storing thereon a processor-readable medium with a set of executable instructions, configured when executed by the at least one processor to: upon detection by the at least one sensor 7051p of a first triggering event, using first and second drive trains 7100, 7200 respectively, deploy first air bag 7011, and second air bag 7021.

FIG. 18, as well as FIG. 20, further illustrate brace frame assembly 800 (see e.g., FIG. 3). As illustrated brace frame assembly 800 comprises first cap 801, second cap 802, and joint members 803, 803' coupling first cap 801, second cap 802, where first cap 801 defines opening 8010, and second cap 802 defines diametrically opposed opening 8020. Furthermore, each first cap 801, and second cap 802, defines channel 8012, (optionally 8012' symmetric) configured to accommodate latch guide 8014, (optionally 8014') and, using clasp member 8013 (optionally 8013') having distal end 8016 (optionally 8016') adapted to engage peg 8015 (optionally 8015'), whereby clasp member 8013 (optionally 8013') is operably coupled to actuator 8011 (optionally 8011') in communication with CCM 705. Further, CCM 705, can comprise in certain exemplary implementations; RPM regulator (7052, not shown), operable to control first motor 7010 and second motor 7020; and converter (7053, not shown), in electric communication with power source (comprised of first power source component 7012, and second power source component 7022), operable to supply power to CCM 705 and to motors 7010, 7020. In certain exemplary implementations CCM 705, will further comprise communication module 7055, independent from any communication module included with payload 500 carrying vehicle (e.g., FIG. 17A, 10). Alternatively or additionally, the release mechanism can be as illustrated in FIG. 25, whereby pin 8011 having longitudinal axis can be located in bore 8012 while the payload chamber 700 is held in brace frame assembly 800 using coupling 8014, accommodated within housing member 8013. Upon an external command from CCM 705 (either following sensing of first triggering event, or following communication with, and receiving ground control command via dedicated communication module 7055), pin 8011 is moved axially by solenoid 8010 or another actuator, breaking the mechanical connection between payload shielding and/or protection system 70 and payload module 600 (see e.g., FIG.s 17B, 26).

In an exemplary implementation, as indicated, first drive train 7100 in communication with the at least one power source (comprised of first power source component 7012 and second power source component 7022), comprises: first bracket (interchangeable with first cap) 801, operably coupled to first half shell 701 and first air bag 7011; first motor 7010, operably coupled to first half shell 701, wherein first motor 7010 is operable to rotate first impeller 7014; and first impeller 7014 having angled blades, coupled to motor 7010 and operable to inflate or deflate first air bag 7011 (see e.g., FIG. 24). Similarly, second drive train 7200 comprise: second bracket (interchangeable with second cap) 802, operably coupled to second half shell 702 and second air bag 7021; second motor 7020 (see e.g., FIG. 7), operably coupled to second half shell 702, wherein second motor 7020 is operable to rotate second impeller 7024; and second impeller 7024 having angled blades, operably coupled to second motor 7020 and operable to inflate second air bag 7021.

In an exemplary implementation, and as illustrated in FIG. 24, each of the first and second air bag 7011, 1021 respectively, used in conjunction with the payload shielding and/or protection system 70, is toroidal, operable to deploy radially to first and second half shells 701, 702 respectively, and is sized such that, when inflated, the ratio between a diameter of a circle circumscribing the circumference of payload chamber 700 (D₇₀₀, see e.g., FIG. 24), and the external diameter of a circle (2R_{O}, see e.g., FIG. 24) circumscribing the toroid, is between about 0.1 and about 0.5. Additionally, each of first and second air bags 7011, 7021 respectively, is sized such that, when inflated, the ratio between the diameter of a circle circumscribing a cross section of the toroid (D*_{I}* see e.g., FIG. 24) and the distance between the anterior end and the posterior end of payload chamber 700 is between about 0.1 and about 0.5.

Turning now to FIG. 22, in an exemplary implementation, the at least one sensor 7051p integrally disposed and used in conjunction with the payload shielding and/or protection system 70, is an accelerometer, a proximity sensor, an inertial measurement unit (IMU), a pressure gauge, a gyroscope, an altimeter, a pitot tube, revolution per minute (RPM) sensor, a thermocouple, or a sensor comprising one or more of the foregoing. In certain exemplary implementations, a measurement module included with the system, can comprise a combination of sensors, integrally coupled to payload chamber 700 (in other words, the sensors will not stay with the delivery vehicle 10 when the payload shielding and/or protection system 70 is released from the delivery vehicle 10), such that the first event triggering the release and inflation of air bags 7011, 7021, is measured by one or group of integrally (to disposed sensors, while the second event is measured by the same or different integrally disposed sensor(s) 7051p. It is noted that although the sensors measuring and detecting the first and/or second triggering event(s) are integral to payload shielding and/or protection system 70, other sensors operably coupled to the delivery vehicle (e.g., UAV, see e.g., FIG. 17A), can provide input signal to payload shielding and/or protection system 70, for example, UAV engine temperature, UAV propellers' RPM and the like. Furthermore, in certain exemplary implementations, CCM 705, is in electronic communication with the delivery vehicle's critical control/command center (C₄). The electronic communication can be made via, for example, a quick disconnect coupling to the C₄ CANBus, or via a detachable Ethernet cable. Moreover, the at least one (integral/external) thermocouple can be used to measure temperature both inside payload chamber 700, or in a predetermined position in the delivery vehicle, for example internal compartment 601 of payload module 600.

Moreover, not all the sensors used to trigger the payload shielding and/or protection system 70, reside within payload chamber 700, but rather provide input from other areas or components of the payload-carrying vehicle. Accordingly and in another exemplary implementation, the first triggering event is: an acceleration, a deceleration, a pressure change, loss of altitude, roll of more than 60 ° off horizontal, a stall, or a triggering event comprising one or more of the foregoing, whereby the triggering event can be, for example; acceleration of more than 9.8 m/s², deceleration of more than -9.8m/s², pressure increase rate of more than 101.3 KPa/sec, loss of altitude of more than 15m (over a predetermined period), roll angle is of more than 60 ° off horizontal, stall is of a pitch angle configured, when combined with the forward velocity to induce aerial vehicle stall, angular velocity is of more than about 0.08 radians per second, a temperature differential rate of more than ±10°C/sec or a triggering event comprising one or more of the foregoing. It is noted that these parameters can be changed as a function of the weight and size of the payload, payload chamber, the carrying vehicle properties, the expected flight geography and the like (in other words, these parameters are user-defined).

An example of pseudocode for the triggering event activation of the system can be:

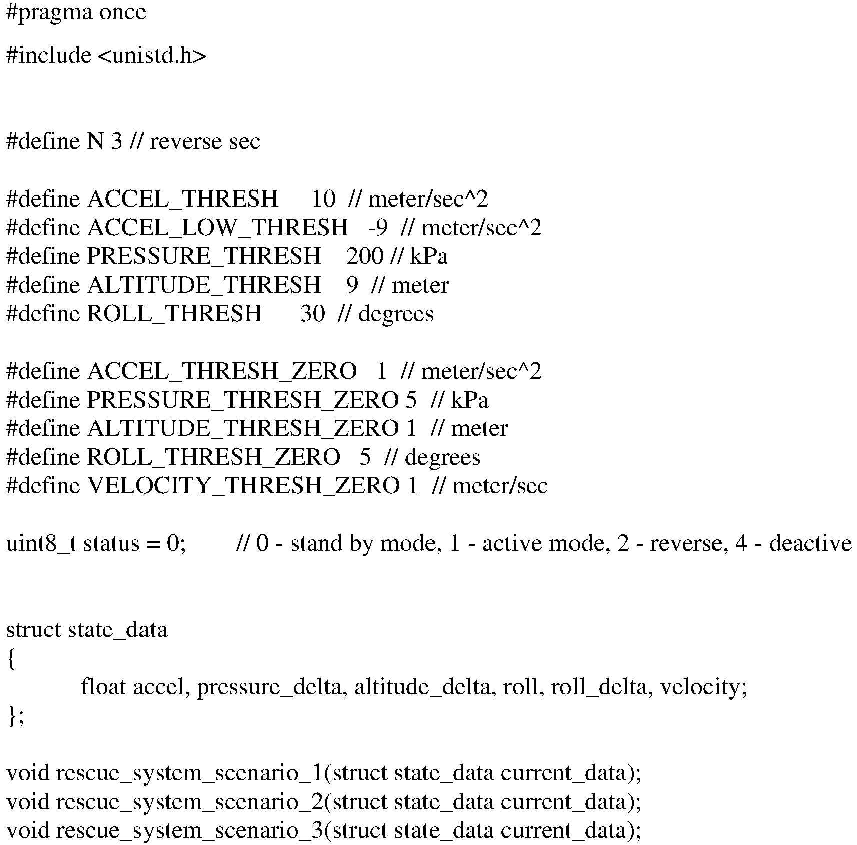

n example of pseudocode following detection of the second event can be:

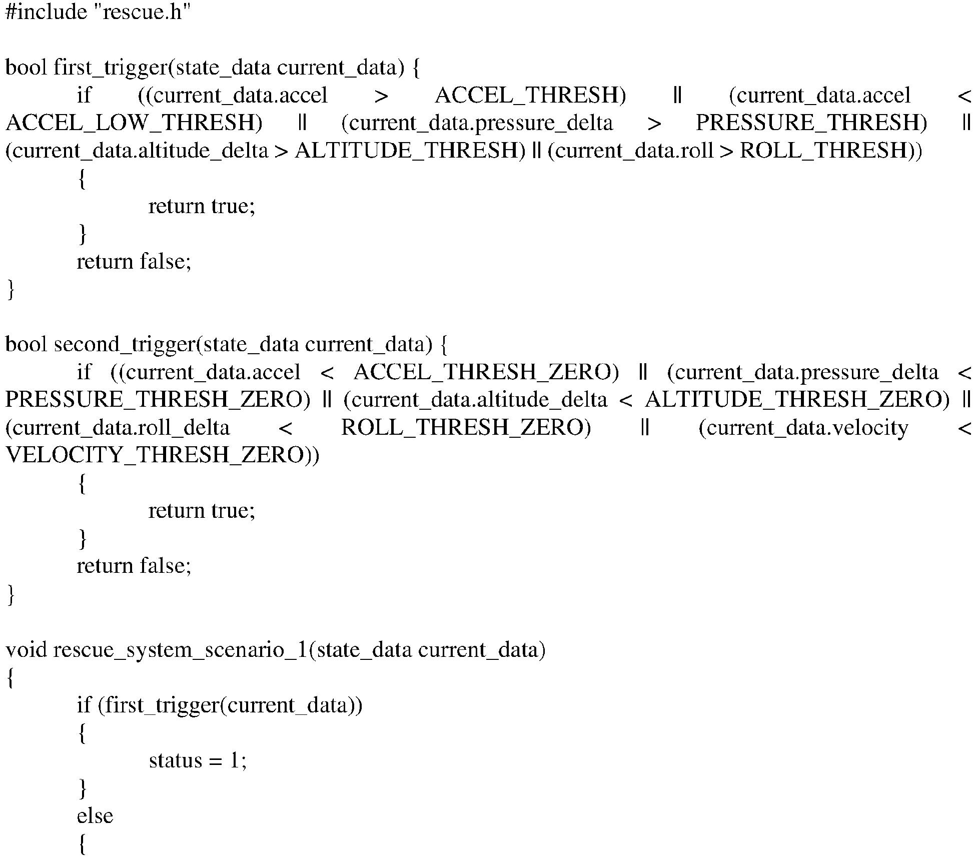

In an exemplary implementation, in deploying first inflatable air bag 7011 and second air bag 7021, set of executable instructions is further configured, when executed, to cause at least one processor to: using RPM regulator 7052, activate first motor 7010 to rotate first impeller 7014 blades in direction configured to inflate first air bag 7011; simultaneously, using RPM regulator 7052, activate second motor 1020 to rotate second impeller 7024 blades in direction configured to inflate second air bag 7021; and maintain at least one of first and second motors 7010, 7020 respectively operating until detection by at least two sensors 7051p of the second triggering event. In an exemplary implementation, first, and second impellers 7014, 7024 are actuated at the first triggering event. Air inflation is configured to achieve a local maxima (referring to the inflation of air bags7011, 7021) upon inflation, which is then adjusted as a function of the payload weight, whereby the degree of inflation is configured to absorb the energy generated by the released payload shielding and/or protection system 70 upon impact. The inflation will be kept at the minimum internal pressure (of the air bags 7011, 7021), to maintain the predetermined pressure configured to absorb the impact based on the weight of the product.

In other words, following activation of the air bags, using sensor(s) 7051p, CCM 705 continuously adjusts the amount of air pressure in first and second air bags 7011, 7021, by controlling RPM of first and second impellers 7014, 7024, inflating them to a level that is a function of payload 500 weight, and payload chamber 700 falling rate (up and until achieving terminal velocity), configured to absorb the energy upon ground impact. In certain exemplary implementations, payload 500 accommodated in payload chamber 700 can have a weight of between about 50g and 2,000 g, for example between about 150 g and about 1,500g, or between about 600g and about 1,000 g. Furthermore, payload 500 accommodated within payload chamber 700 has a volume of between about 0.1 m³, and about 2.9 m³.

Accordingly, the second triggering event can be, for example; constant altitude measured over a predetermined period, constant velocity, (and zero acceleration), or a combination of factors comprising the foregoing. Thereafter, the set of executable instructions is further configured, when executed, to cause the at least one processor to: using combination of pressure gauge, gyroscope, and accelerometer 7051p, each *p^{th}* sensor 7051p included with the system, detect the second triggering event; upon the detection of the second triggering event (for example: a signal obtained from each of the: pressure gauge, gyroscope and the accelerometer that is constant for a predetermined period), allowing CCM 705 to optionally terminate the operation of at least one of: the first, and second motors 7010, 7020: and optionally activate at least one of: the first, and second motors 7010, 7020, to rotate the first and/or second impellers 7014, 7024 blades in a direction configured to deflate the first and/or second air bags 7011, 7021 respectively to a predetermined internal pressure level. Again, here too, the set of executable instructions is further configured, when executed, to cause the at least one processor to operate at least one of the first drive train 7100, and the second drive train 7200 according to weight of payload 500.

Additionally or alternatively, the system can be activated using an "abort" command using communication module 7052, included with payload shielding and/or protection system 70, in communication with CCM 705. Accordingly and in yet another exemplary implementation, the first triggering event is an "abort" command received from the communication module, whereupon, in deploying the first and/or second air bag 7011, 7021, the set of executable instructions is further configured, when executed, to cause the at least one processor to: activate at least one of: first drive train 7100, and second drive train 7200 to inflate the first and/or second air bag 7011, 7021 respectively; and using RPM controller 7053 maintain at least one of: first motor 7010, and second motor 7020 operating until detection of the second triggering event as described hereinabove.

It is further noted, that upon impact with the ground, absorbing energy the payload shielding and/or protection system 70 is operable to differentially inflate each of the first and second air bags 7011, 7021, such that payload 500 is maintained level (horizontal) relative to the landing surface.

In an exemplary implementation, provided herein is an article of manufactur, comprising a non-transitory memory device, storing thereon a computer-readable media comprising a set of executable instructions, configured, when executed by at least one processor to cause the processor to: upon detection by at least one sensor in communication with the at least one processor, of a first triggering event, using a first and second drive trains in communication with the at least one processor, deploy a first air bag, and a second air bag operably coupled to a payload chamber.

In the context of the disclosure, the term "operable" means the system and/or the device and/or the program, or a certain element or step is fully functional, sized, adapted and calibrated, comprises elements for, and meets applicable operability requirements to perform a recited function when activated, coupled, implemented, actuated, effected, realized, or when an executable program is executed by at least one processor associated with the system and/or the device. In relation to systems and circuits, the term "operable" means the system and/or the circuit is fully functional and calibrated, comprises logic for, having the hardware and firmware necessary, as well as the circuitry for, and meets applicable operability requirements to perform a recited function when executed by at least one processor.

The UAV systems disclosed herein can be computerized systems further comprising a central processing module (CPM); a display module; and a user interface module. The Display modules, which can include display elements, which may include any type of element which acts as a display. A typical example is a Liquid Crystal Display (LCD). LCD for example, includes a transparent electrode plate arranged on each side of a liquid crystal. There are however, many other forms of displays, for example OLED displays and Bi-stable displays. New display technologies are also being developed constantly. Therefore, the term display should be interpreted widely and should not be associated with a single display technology. Also, the display module may be mounted on a printed circuit board (PCB) of an electronic device, arranged within a protective housing and the display module is protected from damage by a glass or plastic plate arranged over the display element and attached to the housing.

The term "communicate" (and its derivatives e.g., a first component "communicates with" or "is in communication with" a second component) and grammatical variations thereof are used to indicate a structural, functional, mechanical, electrical, optical, or fluidic relationship, or any combination thereof, between two or more components or elements. As such, the fact that one component is said to communicate with a second component is not intended to exclude the possibility that additional components can be present between, and/or operatively associated or engaged with, the first and second components. Furthermore, the term "electronic communication" means that one or more components of the multi-mode optoelectronic observation and sighting system with cross-platform integration capability described herein are in wired or wireless communication or internet communication so that electronic signals and information can be exchanged between the components.

Likewise, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time. In an embodiment, an electronic control unit of the systems disclosed and claimed, is the electronic control module (ECM).

The term "computer-readable medium" as used herein, in addition to having its ordinary meaning, refers to any medium that participates in providing instructions to a processor for execution. Such a medium may take many forms, including but not limited to, non-volatile media and volatile media. Non-transitory media can be, for example, optical or magnetic disks, such as a storage device. Volatile media includes dynamic memory, such as main memory.

Memory device as used in the methods, programs and systems described herein can be any of various types of memory devices or storage devices. The term "memory device" is intended to encompass an installation medium, e.g., a CD-ROM, floppy disks, or tape device; a computer system memory or random access memory such as DRAM, DDR RAM, SRAM, EDO RAM, Rambus RAM, etc.; or a non-volatile memory such as a magnetic media, e.g., a hard drive, optical storage, or ROM, EPROM, FLASH, etc. The memory device may comprise other types of memory as well, or combinations thereof. In addition, the memory medium may be located in a first computer in which the programs are executed (e.g., the UAV on-board CPM), and/or may be located in a second different computer [or micro controller, e.g., the ground control unit] which connects to the first computer over a network, such as cellular network, satellite, wireless network or their combination (Mesh networks). In the latter instance, the second computer may further provide program instructions to the first computer for execution. The term "memory device" can also include two or more memory devices which may reside in different locations, e.g., in different computers that are connected over a network.

The term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives.

The terms "a", "an" and "the" herein do not denote a limitation of quantity, and are to be construed to cover both the singular and the plural, unless otherwise indicated herein or clearly contradicted by context. The suffix "(s)" as used herein is intended to include both the singular and the plural of the term that it modifies, thereby including one or more of that term (e.g., the stack(s) includes one or more stack). Reference throughout the specification to "one exemplary implementation", "another exemplary implementation", "an exemplary implementation", and so forth, when present, means that a particular element (e.g., feature, structure, and/or characteristic) described in connection with the exemplary implementation is included in at least one exemplary implementation described herein, and may or may not be present in other exemplary implementations. In addition, it is to be understood that the described elements may be combined in any suitable manner in the various exemplary implementations.

Unless specifically stated otherwise, as apparent from the discussions, it is appreciated that throughout the specification discussions utilizing terms such as "processing," "loading," "in communication," "detecting," "calculating," "determining", "analyzing," "applying" or the like, refer to the action and/or processes of a computer or computing system, or similar electronic computing device, that manipulate and/or transform data represented as and to physical manifestation.

For the purposes of the present invention, directional or positional terms such as "top", "bottom", "upper," "lower," "side," "front," "frontal," "forward," "rear," "rearward," "back," "trailing," "above," "below," "left," "right," "horizontal," "vertical," "upward," "downward," "outer," "inner," "exterior," "interior," "intermediate," etc., are merely used for convenience in describing the various embodiments of the present invention. For example, the orientation of the embodiments shown in FIGS. 10A-10B may be reversed or flipped over, rotated by 90° in any direction, etc.

Accordingly, in an exemplary implementation, provided herein is an aerial vehicle (AV) comprising a closed polygonal wing member having a predetermined number of facets, wherein (i) the number of facets of the closed polygonal wing member is between 3 and 6, (ii) the polygon defined by the closed polygonal wing member is an irregular, non-equilateral polygon, (iii) further comprises at least one vertical stabilizer, wherein (iv) the polygon of the closed polygonal wing member is a triangle comprising: a base, the base operable as a rear wing having a pair of lateral ends; and a pair of legs, each leg having an upper surface, lower surface, apical end, basal end, and defining a leading edge and a trailing edge, (v) further comprising a pair of vertical stabilizers forming an integral part of the closed polygonal wing member, each vertical stabilizer having an apical end and a basal end disposed at, and coupled to a corresponding lateral end of the rear wing wherein the basal end of each vertical stabilizer is coupled to the apical end of a corresponding leg, wherein (vi) the apical end of each vertical stabilizer is coupled to a nacelle, the nacelle being coupled to a corresponding lateral end of the rear wing, (vii) each vertical stabilizer further defines a substantially vertical backswept tail, (viii) further defining: a leading edge and a trailing edge; a X-Y cross section defining a profile that changes from a symmetric airfoil profile at the apical end to an asymmetric airfoil profile at the basal end; and an arcuate tapering width in the Z-axis, decreasing from the apical end to the basal end, the AV (ix) further comprising a blended wing body (BWB), having a nose section, a tailless stern section, and a central fuselage section defining a longitudinal axis, wherein the closed polygonal wing member is slanted at a predetermined angle across the BWB from below the nose section to above the tailless stern section, wherein (x) the rear wing is above the tailless stern section and is in parallel with a plane defined by the BWB, (xi) the BWB further having an upper surface, a lower surface and a pair of extensions extending laterally from the central fuselage section, each extension having a lateral end operable to couple to a corresponding leg, as well as (xii) a pair of tapered winglets, each winglet having an upper surface, a lower surface, a leading edge, a trailing edge, a wide lateral end, and a narrow lateral, the wide lateral end coupled to a corresponding leg, forming a continuous plain with the pair of extensions of the BWB, and (xiii) at least one vertical stabilizer extending from at least one of: the winglet, the rear wing, and the leg, wherein the AV (xiv) further comprises a propulsion means operable to propel the AV, such as (xv) a rotor propeller, a turbojet engine, a turboprop engine, a turbofan engine, a turboshaft engine, a liquid-chemical propulsion rocket engine, solid-chemical rocket engine, or an air-breathing rocket propulsion engine, or (xvi) a plurality of propulsion means configured in an array, operable for vertical take-off and landing (VTOL), wherein (xvii) the plurality of propulsion means are configured in an array of four (4) rotors as two-by-two, with two lower propulsion means disposed one each on the corresponding leg, and two propulsion means (e.g., propeller rotors) disposed one each at a lateral end of the rear wing, wherein (xviii) each propulsion mean in the array is both pitched and tilted to form a pyramid comprised of rays (imaginary projection lines) extending apically and axially from each rotor axis of rotation, with the pyramid apex configured to be vertically above the aircraft's center of gravity following take-off, and/or landing (xix) the slant angle of the closed polygonal wing member is between about 30 ° and about 60 ° off horizontal, (xx) extending anteriorly beyond the nose section of the BWB, and (xxi) extending posteriorly beyond the tailless stern section of the BWB, wherein (xxii) the aircraft is operable as an unmanned aerial vehicle (UAV), wherein (xxiii) the closed polygonal wing member is selectably (in other words, without affecting the operation of other components, elements, or steps) releasable from the BWB, and (xxiv) wherein the closed polygonal wing member is selectably moveable along the BWB's longitudinal axis and wherein the rear wing is selectably movable along the nacelles longitudinal axis from their posterior to their anterior ends.

In another exemplary implementation, provided herein is a kit comprising the unmanned aerial vehicle (UAV) disclosed herein; packaging; and instruction, the kit configured when assembled to form the UAV system disclosed having a closed polygonal wing member that is selectably releasable from the BWB, and further comprising a ground control station (GCS) module.

In yet another exemplary implementation, provided herein is a payload shielding system (PSS) comprising: a first half shell operably coupled to the payload comprising a first drive train operable to inflate or deflate a first air bag operably coupled to the first half shell; a second half shell operably coupled to the payload comprising a second drive train operable to inflate or deflate a second air bag operably coupled to the second half shell; at least one sensor, operable to detect a first triggering event, and a second triggering event; and a central control module (CCM), coupled to the first half shell, in communication with: the first drive train, the second drive train, and the at least one sensor, the CCM further comprising a power source, and at least one processor, the processor being in further communication with a non-transitory memory device, storing thereon a set of executable instructions, configured when executed by the at least one processor to: upon detection by the at least one sensor of the first triggering event, using the first and second drive trains, deploy the first air bag, and the second air bag, wherein (xxv) the first drive train comprises: a first bracket, operably coupled to the first half shell and the first air bag; a first motor, operably coupled to the first half shell, wherein the first motor is operable to rotate a first impeller; and the first impeller having angled blades, coupled to the motor and operable to inflate or deflate the first air bag, (xxvi) the second drive train comprise: a second bracket, operably coupled to the second half shell and the second air bag; a second motor, operably coupled to the second half shell, wherein the second motor is operable to rotate a second impeller; and the second impeller having angled blades, operably coupled to the second motor and operable to inflate the second air bag, wherein (xxvii) each of the first and second air bag is toroidal, operable to deploy radially to the first and second half shells respectively, and is sized such that, when inflated the ratio between a diameter of a circle circumscribing the circumference of the payload, and the external diameter of a circle (2Ro) circumscribing the toroid is between about 0.1 and about 0.5, and (xxviii) is sized such that, when inflated the ratio between the diameter of a circle circumscribing a cross section of the toroid and the distance between the anterior end and the posterior end of the payload chamber is between about 0.1 and about 0.5, wherein (xxix) the at least one sensor is an accelerometer, a proximity sensor, an inertial measurement unit (IMU), a pressure gauge, a gyroscope, an altimeter, a pitot tube, revolution per minute (RPM) sensor, a thermocouple, or a sensor comprising one or more of the foregoing, wherein (xxx) the CCM further comprises: a RPM regulator, operable to control the first motor and the second motor; and a converter, in electric communication with the power source, operable to supply power to the CCM, the power source further operable to power a first and a second speed controller and the first and second motors, and (xxxi) : a communication module, wherein (xxxii) the first triggering event is: an acceleration, a deceleration, a pressure change, a loss of altitude, a roll of more than a predetermined angle off horizontal, a stall, or a triggering event comprising one or more of the foregoing, wherein the triggering event is selectably variable, wherein (xxxiii) the acceleration is of more than 9.8 m/s², the deceleration is of more than -9.8m/s², the pressure increase is of more than 101.3 KPa/sec, the loss of altitude of more than 15m, the roll angle is of more than 60 ° off horizontal, the stall is on a pitch angle configured, when combined with the forward velocity to induce a stall, the angular velocity is more than about 0.08 radians per second, or a triggering event comprising one or more of the foregoing, wherein (xxxiv) the system is operable to be incorporated in an aerial vehicle, wherein (xxxv) in deploying the first inflatable air bag and the second air bag, the set of executable instructions is further configured, when executed, to cause the at least one processor to: using the RPM regulator, activate the first motor to rotate the first impeller blades in a direction configured to inflate the first air bag; using the RPM regulator, activate the second motor to rotate the second impeller blades in a direction configured to inflate the second air bag; and maintain at least one of the first and the second motors operating until detection by the at least one sensor of the second triggering event, wherein (xxxvi) the second triggering event is: a constant altitude measured over a predetermined period, a constant velocity, and a zero acceleration, or a combination of factors comprising the foregoing, wherein (xxxvii) the set of executable instructions is further configured, when executed, to cause the at least one processor to: using a pressure gauge, a gyroscope, and an accelerometer, each included with the system, detect the second triggering event; upon the detection of the second triggering event, allowing the CCM to terminate the operation of at least one of: the first, and second motors: and optionally activate at least one of: the first, and second motor to rotate the first and/or second impeller blades at a rotation speed configured to deflate the first and/or second air bag respectively, (xxxviii) the set of executable instructions is further configured, when executed, to cause the at least one processor to operate at least one of the first drive train, and the second drive train according to a weight of a payload, wherein (xxxix) the second triggering event comprises: a signal obtained from each of the: pressure gauge, gyroscope and the accelerometer is constant for a predetermined period, wherein (xl) the first triggering event is a command received from the communication module, wherein (xli) in deploying the first and/or second air bag, the set of executable instructions is further configured, when executed, to cause the at least one processor to: activate at least one of: the first drive train, and the second drive train to inflate the first and/or second air bag respectively; and maintain at least one of: the first motor, and the second motor operating until detection of the second triggering event, (xlii) the second triggering event is: a constant altitude measured over a predetermined period, a constant velocity, and a zero acceleration, or a combination of factors comprising the foregoing, wherein (xliii) the set of executable instructions is further configured, when executed, to cause the at least one processor to: using a pressure gauge, a gyroscope, and an accelerometer, each included with the system, detect the second triggering event; upon the detection of the second triggering event, allowing the CCM to terminate the operation of at least one of: the first, and second motors: and optionally activate at least one of: the first, and second motor to rotate the first and/or second impeller blades at a rotation speed configured to deflate the first and/or second air bag respectively, (xliv) the set of executable instructions is further configured, when executed, to cause the at least one processor to operate at least one of the first drive train, and the second drive train according to a weight of a payload, wherein (xlv) wherein a payload accommodated in the payload chamber has a weight of between about 50g and 2000 g, (xlvi) the payload has a volume of between about 0.1 m³, and about 2.9 m³, and wherein (xlvii) the second triggering event comprises: a signal obtained from each of the: pressure gauge, gyroscope and the accelerometer is constant for a predetermined period.

While the technology has been described in detail and with reference to specific exemplary implementations thereof, it will be apparent to one of ordinary skill in the art that various changes and modifications can be made therein without departing from the spirit and scope thereof. Accordingly, it is intended that the present disclosure covers the modifications and variations of this invention provided they come within the scope of the appended claims and their equivalents.

## Claims

1. An aerial vehicle (AV) comprising a closed polygonal wing member (100) having a predetermined number of facets, wherein the facets cooperatively define a closed loop forming a full contour of the wing member.

2. The AV of claim 1, wherein the number of facets of the closed polygonal wing member (100) is between 3 and 6.

3. The AV of claim 2, wherein the polygon defined by the closed polygonal wing member (100) is an irregular, non-equilateral polygon.

4. The AV of claim 1 or claim 2, wherein the closed polygonal wing member (100) further comprises at least one vertical stabilizer (105, 106).

5. The AV of claim 4, wherein the polygon of the closed polygonal wing member (100) is a triangle comprising:
(a) a base, the base operable as a rear wing (101) having a pair of lateral ends (1013, 1014);
and (b) a pair of legs (102, 103), each leg having an upper surface (1020, 1030), a lower surface (1021, 1031), an apical end (1024, 1034), a basal end (1025, 1035), and defining a leading edge (1022, 1032) and a trailing edge (1023, 1033).

6. The AV of claim 5, further comprising a pair of vertical stabilizers (105, 106) forming an integral part of the closed polygonal wing member (100), each vertical stabilizer (105, 106) having an apical end (1055, 1065) and a basal end (1050, 1060) disposed at, and coupled to a corresponding lateral end (1013, 1014) of the rear wing (101), wherein the basal end (1050, 1060) of each vertical stabilizer is coupled to the apical end (1024, 1034) of a corresponding leg (102, 103).

7. The AV of claim 6, wherein the apical end (1055, 1065) of each vertical stabilizer (105, 106) is coupled to a nacelle (107, 108), the nacelle (107, 108) being coupled to a corresponding lateral end (1013, 1014) of the rear wing (101).

8. The AV of claim 6 or claim 7, wherein each vertical stabilizer (105, 106) further defines a substantially vertical backswept tail (1053, 1063).

9. The AV of claim 8, wherein each vertical stabilizer (105, 106) further defines:
(a) a leading edge (1054) and a trailing edge (1056, 1066);
(b) a X-Y cross section defining a profile that changes from a symmetric airfoil profile at the apical end (1055, 1065) to an asymmetric airfoil profile at the basal end (1050, 1060);
and (c) an arcuate tapering width in the Z-axis, decreasing from the apical end (1055, 1065) to the basal end (1050, 1060).

10. The AV of any one of claims 1 to 9, further comprising a blended wing body (BWB) (200) having a nose section (2000), a tailless stern section (2001), and a central fuselage section (210) defining a longitudinal axis (XL), wherein the closed polygonal wing member (100) is slanted at a predetermined angle across the BWB (200) from below the nose section (2000) to above the tailless stern section (2001).

11. The AV of claim 10, wherein the rear wing (101) is above the tailless stern section (2001) and is in parallel with a plane defined by the BWB (200), and wherein the BWB (200) further has an upper surface (2003), a lower surface (2002), and a pair of extensions (2004, 2005) extending laterally from the central fuselage section (210), each extension (2004, 2005) having a lateral end (2006, 2007) operable to couple to a corresponding leg (102, 103).

12. The AV of claim 11, further comprising a pair of tapered winglets (300, 301), each winglet (300, 301) having an upper surface (3003, 3013), a lower surface (3002, 3012), a leading edge (3005, 3015), a trailing edge (3006, 3016), a wide lateral end (3002, 3012) coupled to a corresponding leg (102, 103), and a narrow lateral end (3001, 3011), forming a continuous plain with the pair of extensions (2004, 2005) of the BWB (200).

13. The AV of claim 12, further comprising at least one vertical stabilizer (105, 106) extending from at least one of:
the winglet (300, 301), the rear wing (101), and the leg (102, 103).

14. The AV of any one of claims 1 to 13, further comprising a propulsion system operable to propel the AV, wherein the propulsion system is a rotor propeller (400i), a turbojet engine, a turboprop engine, a turbofan engine, a turboshaft engine, a liquid-chemical propulsion rocket engine, a solid-chemical rocket engine, or an air-breathing rocket propulsion engine.

15. The AV of claim 14 when dependent on any one of claims 5 to 13, wherein the propulsion system comprises a plurality of rotors (400i) configured in an array of four (4) rotors operable for vertical take-off and landing (VTOL), with two lower rotors disposed one each on a corresponding leg (102, 103), and two rotors (400i) disposed one each at a lateral end (1013, 1014) of the rear wing (101), operably coupled to a corresponding nacelle (107, 108), wherein each rotor (400i) in the array is tilted to form a pyramid comprised of rays (4100v) extending apically and axially from each rotor axis of rotation (4002), with the pyramid apex (4000) positioned vertically above the aircraft's centre of gravity (220) following take-off.
